(19) Europäisches Patentamt
European Patent Office
Office européen des brevets

(11) EP 2 053 086 A1

(12) EUROPEAN PATENT APPLICATION
published in accordance with Art. 153(4) EPC

(43) Date of publication:
**29.04.2009 Bulletin 2009/18**

(21) Application number: **07792032.0**

(22) Date of filing: **06.08.2007**

(51) Int Cl.:
***C08L 23/10*** (2006.01) ***C08F 297/08*** (2006.01)
***C08J 5/18*** (2006.01) ***C08L 23/08*** (2006.01)
***C08L 53/00*** (2006.01)

(86) International application number:
**PCT/JP2007/065362**

(87) International publication number:
**WO 2008/018409 (14.02.2008 Gazette 2008/07)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **11.08.2006 JP 2006220679**
**27.06.2007 JP 2007169207**

(71) Applicants:
- **Mitsui Chemicals, Inc.**
**Tokyo 105-7117 (JP)**
- **Prime Polymer Co., Ltd.**
**Tokyo 105-7117 (JP)**

(72) Inventors:
- **ITAKURA, Keita**
**Chiba 299-0265 (JP)**
- **KIMURA, Tokutaro**
**Chiba 299-0265 (JP)**
- **KAWATA, Mitsuo**
**Chiba 299-0265 (JP)**
- **HASHIZUME, Satoshi**
**Osaka 592-8501 (JP)**
- **HIGUCHI, Masashi**
**Osaka 592-8501 (JP)**
- **FUNAYA, Munehito**
**Chiba 299-0265 (JP)**

(74) Representative: **Benson, John Everett**
**J. A. Kemp & Co.**
**14 South Square**
**Gray's Inn**
**London WC1R 5JJ (GB)**

# (54) PROPYLENE RESIN COMPOSITION FOR PACKAGING MATERIAL

(57) Packaging propylene resin compositions are excellent in balance in high transparency, rigidity, low-temperature impact resistance and blocking resistance. Retort films, protective films, medical container packaging films and freshness-keeping films, and sheets for similar purposes are obtained from the compositions. A packaging propylene resin composition includes a propylene polymer (A) satisfying specific requirements and a propylene/ethylene copolymer (B) satisfying specific requirements. In another packaging propylene resin composition, $D_{insol}$ and $D_{sol}$ satisfy specific requirements.

EP 2 053 086 A1

## Description

### FIELD OF THE INVENTION

The present invention relates to packaging propylene resin compositions having specific properties. In more detail, the invention relates to packaging propylene resin compositions having excellent rigidity, transparency, impact resistance and blocking resistance.

### BACKGROUND OF THE INVENTION

Propylene resin compositions find use in various fields including convenience goods, kitchen accessories, packaging films, home electric appliances, machine parts, electric parts and automobile parts. In the field of packaging films in particular, propylene resin compositions that satisfy required properties have been proposed. However, the applications of the films have been so widespread that existing propylene resin compositions cannot cope with demands. In detail, improvements are required in retort films, protective films, medical packaging materials and freshness-keeping packaging materials.

Retort foods for professional use have rapidly become more widespread than for domestic use, and there has been a need for packaging materials capable of containing larger quantities of retort foods than packages used in households. Because retort foods are generally stored for long periods of time at normal temperature or low temperatures, it is necessary that packaging films possess high heat seal strength and low-temperature impact strength so that the packages or heat-seals will not be broken to cause leakage. When the packaging films are used for retort foods, the films containing retort foods are tightly sealed and subjected to retort sterilization in an autoclave at about 100 to 140°C. Accordingly, the packaging films require heat resistance and heat seal strength at the heat-seals enough to withstand treatments for food quality control.

Retort packaging films are usually polypropylene-ethylene/α-olefin copolymer rubber blend films, polypropylene block copolymer films, or films from blend resin compositions of polypropylene block copolymers and ethylene/α-olefin copolymer rubbers. These films, however, are not well-balanced in major packaging film performances such as heat resistance, low-temperature impact strength, blocking resistance and heat sealability. In particular, the balance between low-temperature impact strength and heat sealability is bad. To minimize reduction in heat seal strength after retort treatment, Patent Document 1 proposes to use a heat seal layer of a propylene/α-olefin block copolymer containing 95 to 70 wt% of a polypropylene block and 5 to 30 wt% of an elastomer block. The films disclosed in this document are produced by molding a propylene/ethylene block copolymer. The copolymer is synthesized with a Ziegler-Natta catalyst system and contains an elastomer block having a wide composition distribution in which the propylene content is 30 to 70 mol%. Because of the nonuniform composition, the films are poor in low-temperature impact strength.

Patent Document 2 discloses polypropylene sheets and films that are formed of propylene block copolymers produced with a metallocene catalyst system. The sheets and films show improved impact resistance because the propylene block copolymers have a uniform composition in an elastomer block. The patent document discloses a propylene polymer in which a n-decane soluble part that substantially defines an elastomer block has [η] of not less than 2.5 dl/g. The films of this patent document are improved in low-temperature impact resistance but are poor in transparency. With environmental concerns becoming increasingly significant, reduction of packaging films is demanded. It is therefore desired that films are reduced in thickness but still have high impact resistance and improved rigidity.

Development of retort packaging materials often encounters the need of transparency to permit recognition of items that are packaged. Films with high transparency provide advantages that the films are microwavable, inside items are recognized, and metal detection in production line is easy. To improve transparency, Patent Document 3 discloses resin compositions containing a metallocene-catalyzed propylene homopolymer and a metallocene-catalyzed ethylene/propylene/1-butene copolymer. The films disclosed in this patent document have excellent transparency but are still insufficient in retort film requirements such as low-temperature impact resistance and rigidity.

Patent Document 4 discloses resin compositions containing a metallocene-catalyzed propylene/ethylene random copolymer and an ethylene/α-olefin copolymer. The films disclosed in this document are excellent in transparency and impact resistance, but the heat resistance thereof is insufficient for the films to undergo high-temperature retort treatment.

Protective films of propylene resin compositions are used to prevent surface scratches on automobiles during domestic transportation or export. The protective films are required to show appropriate adhesion to metal surfaces, to be easily removed and to have high tearing strength. For example, Patent Document 5 discloses protective films that are formed of propylene block copolymers produced with a Ziegler-Natta catalyst. The films are described to be suited to protect metal surfaces. However, the propylene block copolymers have a wide molecular weight distribution of rubber components, and low-molecular rubbers may bleed and the adhesion may change with time. Meanwhile, the recent expansion of the market of liquid crystal displays is accompanied by increased demands for surface protective films for

optical sheets used in liquid crystal displays. The protective films for optical sheets are required to have small temporal change in adhesion, and to have less fisheyes and high transparency to facilitate appearance inspection.

Materials for medical containers such as infusion containers are shifting from glass materials to plastic materials. Conventional materials for infusion containers are polyethylenes, but polypropylenes are increasingly used because of excellent balance in flexibility, moisture-proof properties, water resistance and chemical resistance. In fact, polypropylenes are advantageous over polyethylenes in terms of heat resistance because sterilization at 121°C is required in some countries. However, polypropylenes are inferior to polyethylenes in low-temperature impact resistance, and accidental dropping of infusion containers in cold places can result in breakage of the containers. The low-temperature impact resistance of polypropylenes may be improved by using propylene block copolymers. However, existing propylene block copolymers have a bad balance in transparency, impact resistance and heat resistance.

On the other hand, freshness-keeping packaging materials for vegetables and fruits require high permeability to gases such as oxygen, carbon dioxide and ethylene. For example, Patent Document 6 discloses films that are formed of propylene resin compositions containing a propylene/α-olefin copolymer. The films achieve improved gas permeability, but have low rigidity and cannot be used appropriately in practice.

Patent Document 7 discloses films that are made of resin compositions containing polypropylene and ethylene/1-octene random copolymer. The document describes that excellent gas permeability and film rigidity are obtained. However, the production involves kneading polypropylene and ethylene/1-octene copolymer to increase costs and energy consumption.

Patent Document 1: JP-A-2000-255012
Patent Document 2: JP-A-2006-152068
Patent Document 3: JP-A-2001-172402
Patent Document 4: JP-A-2004-3597711
Patent Document 5: JP-A-2000-168006
Patent Document 6: JP-A-2001-106802
Patent Document 7: JP-A-2006-299229

DISCLOSURE OF THE INVENTION

To solve the problems in the art as described above, it is an object of the invention to provide packaging propylene resin compositions that are suited to produce retort films or protective films having excellent balance in high transparency, rigidity, low-temperature impact resistance and blocking resistance. It is another object of the invention that the compositions provide retort films, protective films, packaging films for medical containers and freshness-keeping packaging films and sheets for similar purposes that are excellent in balance in high transparency, rigidity, low-temperature impact resistance and blocking resistance.

A packaging propylene resin composition comprises 60 to 90 wt% of a propylene polymer (A) satisfying the requirements (a1) and (a2) and 40 to 10 wt% of a propylene/ethylene copolymer (B) satisfying the requirements (b1) to (b4) ((A) + (B) = 100 wt%). A sheet or film of the invention is obtained from the composition.

Propylene polymer (A):

(a1) The melt flow rate (MFR: ASTM D 1238, 230°C, 2.16 kg load) is 0.1 to 40 (g/10 min).

(a2) The melting point (Tm) measured with a differential scanning calorimeter (DSC) is 145 to 170°C.

Propylene/ethylene copolymer (B):

(b1) The content of ethylene-derived structural units is 15 to less than 45 mol%.

(b2) The intrinsic viscosity [η] determined in decalin at 135°C is 1.8 to 3.5 dl/g.

(b3) The molecular weight distribution (Mw/Mn) is not more than 3.5.

(b4) The content of a 23°C n-decane soluble part is not less than 95 wt%.

In another aspect of the invention, a packaging propylene resin composition comprises 60 to 90 wt% of a 23°C n-decane insoluble part ($D_{insol}$) which satisfies the requirements (a1') and (a2') and 40 to 10 wt% of a 23°C n-decane soluble part ($D_{sol}$) which satisfies the requirements (b1') to (b3'), and the composition has a melt flow rate (MFR: ASTM D 1238, 230°C, 2.16 kg load) of 0.1 to 20 (g/10 min). A sheet or film according to one aspect of the invention is obtained from the composition.

N-decane insoluble part ($D_{insol}$):

(a1') The content of ethylene-derived structural units is not more than 2 wt%.
(a2') The melting point (Tm) measured with a differential scanning calorimeter (DSC) is 145 to 170°C.

N-decane soluble part ($D_{sol}$):

(b1') The content of ethylene-derived structural units is 15 to less than 45 mol%.
(b2') The intrinsic viscosity [η] determined in decalin at 135°C is 1.8 to 3.5 dl/g.
(b3') The molecular weight distribution (Mw/Mn) is not more than 3.5.

ADVANTAGES OF THE INVENTION

The sheets or films from the propylene resin compositions according to the present invention achieve excellent balance in transparency, low-temperature impact resistance and rigidity over sheets or films obtained from conventional Ziegler-Natta catalyzed propylene block copolymers.

BEST MODE FOR CARRYING OUT THE INVENTION

A packaging propylene resin composition according to an aspect of the present invention includes a propylene polymer (A) and a propylene/ethylene copolymer (B).
The components are described in detail below.

(1) Propylene polymer (A)

The propylene polymer (A) that is a component of the packaging propylene resin composition has:

(a1) a melt flow rate (MFR: ASTM D 1238, 230°C, 2.16 kg load) of 0.1 to 40 (g/10 min), preferably 0.5 to 20 (g/10 min), and more preferably 1.0 to 10 (g/10 min); and
(a2) a melting point (Tm) measured with a differential scanning calorimeter (DSC) of 145 to 170°C, preferably 150 to 170°C, and more preferably 155 to 170°C.

If MFR is less than 0.1 (g/10 min), a packaging propylene resin composition obtained by mixing the propylene polymer with a propylene/ethylene copolymer (B) may have bad extrusion properties. If MFR exceeds 40 (g/10 min), the obtainable sheets or films tend to have bad low-temperature impact resistance.
If the propylene polymer has a melting point of less than 145°C, the obtainable sheets or films have poor heat resistance and may be softened during retort treatment. In particular, such films may not perform satisfactorily as high-retort films. Further, the obtainable films are so limp that the films may have wrinkles when applied to surfaces and may not be suitably used as protective films.
The propylene polymers (A) in the invention include propylene homopolymers, and copolymers of propylene and small amounts, for example not more than 2 wt%, of other $\alpha$-olefins. Preferred $\alpha$-olefins include ethylene, 1-butene, 1-hexene and 1-octene.
The propylene polymer (A) preferably has a molecular weight distribution (Mw/Mn) of not more than 3. 5, more preferably not more than 3.0, and still more preferably not more than 2.5. When the propylene polymer (A) has this molecular weight distribution, the obtainable packaging propylene resin composition can give sheets or films having higher transparency, impact resistance and blocking resistance.
The propylene polymers (A) are preferably produced in the presence of a metallocene catalyst. The metallocene catalysts used in the production of the propylene polymers (A) may contain a metallocene compound, at least one compound selected from organometallic compounds, organoaluminum oxy-compounds and compounds capable of reacting with the metallocene compound to form an ion pair, and optionally a particulate carrier. Preferred examples thereof include bridged metallocene compounds disclosed in WO 01/27124 and JP-A-H11-315109 filed by one of the present applicants.

(2) Propylene/ethylene copolymer (B)

The propylene/ethylene copolymer (B) that is a component of the packaging propylene resin composition has:

(b1) a content of ethylene-derived structural units in the range of 15 to less than 45 mol%;

(b2) an intrinsic viscosity [η] determined in decalin at 135°C of 1.8 to 3.5 dl/g, preferably 1.9 to 3.0 dl/g, and more preferably 2.0 to 2.5 dl/g;
(b3) a molecular weight distribution (Mw/Mn) of not more than 3.5, preferably not more than 3.0, and more preferably not more than 2.5; and
(b4) a content of a 23°C n-decane soluble part of not less than 95 wt%, preferably not less than 98 wt%, and more preferably not less than 99 wt%.

If the copolymer contains ethylene-derived structural units at less than 15 mol%, the obtainable sheets or films may have lower impact resistance. If the content is 45 mol% or more, the obtainable sheets or films tend to lower transparency and may not be suited as transparent retort films.
If the copolymer has an intrinsic viscosity [η] of less than 1.8 dl/g, the obtainable sheets or films may have lower impact resistance. If the intrinsic viscosity [η] exceeds 3.5 dl/g, transparency may be deteriorated and the obtainable films are not suited as transparent retort films. Further, an intrinsic viscosity [η] exceeding 3.5 dl/g increases the probability of fisheyes in the obtainable sheets or films, and such films may not be used as retort films or protective films.
If the molecular weight distribution (Mw/Mn) exceeds 3.5, the copolymer contains a larger amount of low-molecular components and the obtainable sheets or films may have lower impact resistance and tearing strength; further, low-molecular polymers may bleed out. Such films may not be suitably used as retort films or protective films.
If the content of a 23°C n-decane soluble part is less than 95 wt%, the propylene/ethylene copolymer has a wide composition distribution and the obtainable sheets or films have lower rigidity and impact resistance and may not be suitable as retort films or protective films.
The propylene/ethylene copolymers (B) are preferably produced in the presence of a metallocene catalyst. The metallocene catalysts used in the production of the propylene/ethylene copolymers (B) may contain a metallocene compound, at least one compound selected from organometallic compounds, organoaluminum oxy-compounds and compounds capable of reacting with the metallocene compound to form an ion pair, and optionally a particulate carrier. Preferred examples thereof include bridged metallocene compounds disclosed in WO 01/27124 and JP-A-H11-315109 filed by one of the present applicants.
The packaging propylene resin compositions have a first and a second embodiment. The melt flow rate (a1) of the propylene polymer (A), and the content of ethylene-derived structural units (b1) of the propylene/ethylene copolymer (B) in each embodiment are as described below.

[First embodiment]

In the first embodiment of the packaging propylene resin compositions, the content of ethylene-derived structural units (b1) of the propylene/ethylene copolymer (B) is 15 to 25 mol%, preferably 17 to 25 mol%, and more preferably 18 to 23 mol%.
The above content of ethylene-derived structural units (b1) of the propylene/ethylene copolymer (B) ensures that the obtainable sheets or films have excellent balance between transparency and blocking resistance.

[Second embodiment]

In the second embodiment of the packaging propylene resin compositions, the content of ethylene-derived structural units (b1) of the propylene/ethylene copolymer (B) is more than 25 to less than 45 mol%, preferably in the range of 27 to 40 mol%, and more preferably 30 to 35 mol%. This content of ethylene-derived structural units (b1) of the propylene/ethylene copolymer (B) ensures that the obtainable sheets or films have excellent balance between impact resistance and transparency.

(3) Propylene resin compositions

In one aspect, the packaging propylene resin composition contains the propylene polymer (A) at 60 to 90 wt%, preferably 70 to 85 wt%, and more preferably 80 to 85 wt%, and the propylene/ethylene copolymer (B) at 40 to 10 wt%, preferably 30 to 15 wt%, and more preferably 20 to 15 wt%, based on 100 wt% of (A) and (B) combined. (This composition is referred to as the composition C1 hereinafter.)
If the amount of the propylene polymer (A) is less than 60 wt%, the obtainable sheets or films tend to have lower rigidity and may not be suitably used as retort films. If the amount of the propylene polymer exceeds 90 wt%, the obtainable sheets or films tend to have lower impact resistance and may not be suitably used as retort films.
The packaging propylene resin compositions according to the present invention preferably have a melt flow rate (MFR: ASTM D 1238, 230°C, 2.16 kg load) of 0.1 to 40 g/10 min.
In another aspect of the present invention, a packaging propylene resin composition contains 60 to 90 wt%,

preferably 70 to 85 wt%, and more preferably 77 to 83 wt% of a 23°C n-decane insoluble part ($D_{insol}$) which satisfies the following requirements (a1') and (a2') and 40 to 10 wt%, preferably 30 to 15 wt%, and more preferably 23 to 17 wt% of a 23°C n-decane soluble part ($D_{sol}$) which satisfies the following requirements (b1') to (b3'). The composition has a melt flow rate (MFR: ASTM D 1238, 230°C, 2.16 kg load) of 0.1 to 20 (g/10 min). (This composition is referred to as the composition C2 hereinafter.)

N-decane insoluble part ($D_{insol}$):

(a1') The content of ethylene-derived structural units is not more than 2 wt%.
(a2') The melting point (Tm) measured with a differential scanning calorimeter (DSC) is 145 to 170°C, preferably 150 to 170°C, and more preferably in the range of more than 155 to not more than 170°C.

N-decane soluble part ($D_{sol}$) :

(b1') The content of ethylene-derived structural units is 15 to less than 45 mol%.
(b2') The intrinsic viscosity [η] determined in decalin at 135°C is 1.8 to 3.5 dl/g, preferably 1.9 to 3.0 dl/g, and more preferably 2.0 to 2.5 dl/g.
(b3') The molecular weight distribution (Mw/Mn) is not more than 3.5, preferably not more than 3.0, and more preferably not more than 2.5.
The packaging propylene resin compositions according to this aspect have a first and a second embodiment. The content of ethylene-derived structural units (b1') of the n-decane soluble part ($D_{sol}$) in each embodiment is as described below.

[First embodiment]

In the first embodiment of the packaging propylene resin compositions, the content of ethylene-derived structural units (b1') of the n-decane soluble part ($D_{sol}$) is 15 to 25 mol%, preferably 17 to 25 mol%, and more preferably 18 to 23 mol%. This content of ethylene-derived structural units (b1') of the n-decane soluble part ($D_{sol}$) ensures that the obtainable sheets or films have excellent balance between transparency and blocking resistance.

[Second embodiment]

In the second embodiment of the packaging propylene resin compositions, the content of ethylene-derived structural units (b1') of the n-decane soluble part ($D_{sol}$) is more than 25 to less than 45 mol%, preferably in the range of 27 to 40 mol%, and more preferably 30 to 35 mol%. This content of ethylene-derived structural units (b1') of the n-decane soluble part ($D_{sol}$) ensures that the obtainable sheets or films have excellent balance between impact resistance and transparency.

(4) Other components

The packaging propylene resin compositions (including the compositions C1 and C2) may contain other components such as polymers in addition to the propylene polymers (A) and the propylene/ethylene copolymers (B). Such components are for example ethylene/α-olefin copolymers (D), ethylene/propylene copolymers (B') and propylene polymers (I').

<Ethylene/α-olefin copolymers (D)>

The packaging propylene resin compositions may contain ethylene/α-olefin copolymers (D) to achieve improved performances such as impact resistance of the obtainable sheets or films. Examples of the α-olefins in the ethylene/α-olefin copolymers (D) include C4-20 α-olefins, with 1-butene, 1-hexene and 1-octene being preferable. The ethylene/α-olefin copolymers (D) generally have a density of 0.850 to 0.910 g/cm$^3$, and preferably 0.860 to 0.890 g/cm$^3$.
If the density of the copolymer is less than 0.850 g/cm$^3$, the obtainable sheets or films tend to have lower transparency or blocking resistance and may not be suitably used as retort films. If the density exceeds 0. 910 g/cm$^3$, the obtainable sheets or films may have lower impact resistance and tend to have fisheyes, and thus may not be suitably used as retort films. The amount of the ethylene/α-olefin copolymers (D) is 0 to 15 wt%, preferably 0 to 10 wt%, and more preferably 0 to 5 wt% in the packaging propylene resin composition (100 wt%).

<Ethylene/propylene copolymers (B')>

To achieve improved performances such as impact resistance of the obtainable sheets or films, the packaging propylene resin compositions may contain ethylene/propylene copolymers (B') that contain ethylene-derived structural units in amounts different from those in the propylene/ethylene copolymer (B), or ethylene-derived structural units in amounts different from those in the n-decane soluble part ($D_{sol}$) in the composition C2.

The ethylene/propylene copolymers (B') preferably contain ethylene-derived structural units at 25 to 85 mol%, more preferably 30 to 70 mol%, and still more preferably 30 to 55 mol%.

In order that the packaging propylene resin compositions can give sheets or films having improved impact resistance and blocking resistance, the ethylene/propylene copolymers (B') are preferably produced in the presence of a metallocene catalyst. The amount of the ethylene/propylene copolymers (B') is 0 to 15 wt%, preferably 0 to 10 wt%, and more preferably 0 to 5 wt% in the packaging propylene resin composition (100 wt%).

The ethylene/propylene copolymers (B') may be synthesized when the propylene polymer (A) and the propylene/ethylene copolymer (B) are produced in one system.

<Propylene polymers (I')>

Examples of the propylene polymers (I') used in the packaging propylene resin compositions include propylene homopolymers, copolymers of propylene with ethylene or a C4-α-olefin, and block copolymers of propylene with ethylene or a C4- α-olefin. Examples of the α-olefins include 1-butene, 2-methyl-1-propene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene and 1-dodecene. Of these α-olefins, 1-butene, 1-pentene, 1-hexene and 1-octene are preferred. Propylene may be copolymerized with two or more of ethylene and C4- α-olefins.

The propylene polymers (I') generally have a melting point (Tm) of 150 to 170°C, and preferably 155 to 170°C. The propylene polymers (I') generally have a melt flow rate (MFR: ASTM D 1238, 230°C, 2.16 kg load) of 0.1 to 10 g/10 min, preferably 0.5 to 8 g/10 min, and more preferably 1.0 to 5 g/10 min.

The amount of the propylene polymers (I') is 0 to 50 wt%, preferably 0 to 25 wt%, and more preferably 0 to 10 wt% in the packaging propylene resin composition (100 wt%).

The packaging propylene resin compositions of the invention may contain additives generally added to olefin polymers, while still achieving the objects of the invention. Exemplary additives include antioxidants, nucleating agents, lubricants, flame-retardants, anti-blocking agents, colorants, inorganic or organic fillers, and synthetic resins.

(5) Processes for producing packaging propylene resin compositions

The packaging propylene resin compositions may be produced by known methods. For example, the propylene polymer (A) and the propylene/ethylene copolymer (B) are mixed in the aforementioned amounts optionally together with the polymers and additives as required, by means of known apparatuses such as Henschel mixers, ribbon blenders and Banbury mixers. The mixture prepared as described above may be further melt-kneaded at 170 to 300°C, and preferably 190 to 250°C using known kneading apparatuses such as single-screw extruders, twin-screw extruders, Brabender mixers and roll mixers.

Alternatively, the packaging propylene resin compositions may be produced by polymerizing propylene and ethylene in the following manner.

When the packaging propylene resin composition is prepared by polymerization, it is preferable that the following two steps ([Step 1] and [Step 2]) are continuously carried out with use of a metallocene catalyst to produce a propylene block copolymer.

In [Step 1], propylene is homopolymerized or copolymerized with ethylene in the presence of a metallocene catalyst to give the propylene polymer (A) or a homopolymer or copolymer that contains a 23°C n-decane soluble part ($D_{sol}$) at not more than 0.5 wt%. Here, the amount of the (co)polymer produced should correspond to the content thereof in the composition as described above.

In [Step 2], propylene and ethylene are copolymerized in the presence of a metallocene catalyst to give the propylene/ethylene copolymer (B) or a copolymer that contains a 23°C n-decane insoluble part ($D_{insol}$) at not more than 5.0 wt%. Here, the amount of the copolymer produced should correspond to the content thereof in the composition as described above.

In detail, the packaging propylene resin composition is preferably produced by carrying out [Step 1] and [Step 2] continuously with use of a polymerization apparatus in which two or more reactors are connected in series.

In [Step 1], propylene is homopolymerized or copolymerized with a small amount of ethylene at a polymerization temperature of 0 to 100°C and a polymerization pressure of normal pressure to 5 MPa gauge pressure. In [Step 1], propylene is homopolymerized or copolymerized with a small amount of ethylene so that the resultant propylene (co) polymer from [Step 1] will be a main component of the 23°C n-decane insoluble part ($D_{insol}$) in the packaging propylene resin composition.

In [Step 2], propylene and ethylene are copolymerized at a polymerization temperature of 0 to 100°C and a polymerization pressure of normal pressure to 5 MPa gauge pressure. In [Step 2], the feeding rate of ethylene with respect to propylene is increased from [Step 1] so that the resultant propylene/ethylene copolymer from [Step 2] will be a main component of the 23°C n-decane soluble part ($D_{sol}$) in the packaging propylene resin composition.

Here, the part $D_{insol}$ substantially corresponds to the propylene polymer (A) in the packaging propylene resin composition, and the part $D_{sol}$ substantially corresponds to the propylene/ethylene copolymer (B) in the packaging propylene resin composition.

In the part $D_{insol}$ substantially corresponding to the propylene polymer (A), a large proportion of 2,1-insertion and 1,3-insertion of propylene units leads to an increased distribution of the part $D_{sol}$ substantially corresponding to the propylene/ethylene copolymer (B) in the packaging propylene resin composition, possibly resulting in lowering in rigidity and impact resistance. The 2,1-insertion and 1,3-insertion refer to irregularly arranged propylene units in the packaging propylene resin composition. Partial structures having these insertions are represented by Formula (i) and (ii) below:

[Chem. 1]

Structure (i)

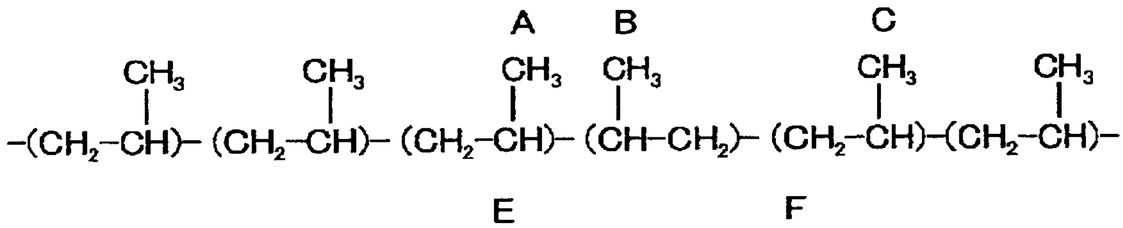

Structure (ii)

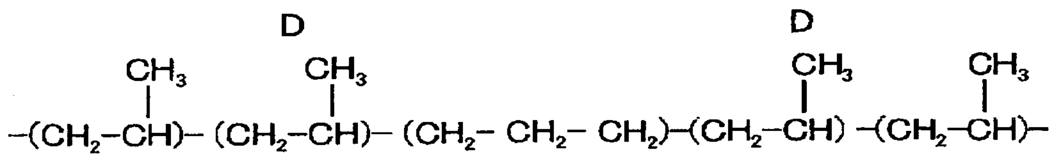

The polymerization in [Step 1] and [Step 2] may be followed by known post treatments such as catalyst deactivation, catalyst residue removal and drying as required, whereby the packaging propylene resin composition is obtained in the form of powder.

(6) Metallocene catalysts

In the invention, the propylene polymer (A) and propylene/ethylene copolymer (B), or the propylene resin composition will be preferably produced in the presence of a metallocene catalyst.

The metallocene catalysts used in the invention may contain a metallocene compound, at least one compound selected from organometallic compounds, organoaluminum oxy-compounds and compounds capable of reacting with the metallocene compound to form an ion pair, and optionally a particulate carrier. Preferably, the metallocene catalysts are capable of catalyzing stereoregular polymerization to afford an isotactic or syndiotactic structure. Preferred examples of the metallocene catalysts include bridged metallocene compounds disclosed in WO 01/27124 filed by one of the present applicants.

[Chem. 2]

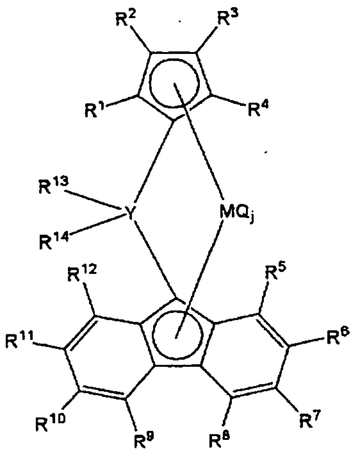

・・・[I]

In Formula [I], $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ may be the same or different and are each a hydrogen atom, a hydrocarbon group or a silicon-containing group. Examples of the hydrocarbon groups include linear hydrocarbon groups such as methyl, ethyl, n-propyl, allyl, n-butyl, n-pentyl, n-hexyl, n-heptyl, n-octyl, n-nonyl and n-decanyl groups; branched hydrocarbon groups such as isopropyl, tert-butyl, amyl, 3-methylpentyl, 1,1-diethylpropyl, 1,1-dimethylbutyl, 1-methyl-1-propylbutyl, 1,1-propylbutyl, 1,1-dimethyl-2-methylpropyl and 1-methyl-1-isopropyl-2-methylpropyl groups; saturated cyclic hydrocarbon groups such as cyclopentyl, cyclohexyl, cycloheptyl, cyclooctyl, norbornyl and adamantyl groups; unsaturated cyclic hydrocarbon groups such as phenyl, tolyl, naphthyl, biphenyl, phenanthryl and anthracenyl groups; saturated hydrocarbon groups substituted with unsaturated cyclic hydrocarbon groups such as benzyl, cumyl, 1,1-diphenylethyl and triphenylmethyl groups; and heteroatom-containing hydrocarbon groups such as methoxy, ethoxy, phenoxy, furyl, N-methylamino, N,N-dimethylamino, N-phenylamino, pyrryl and thienyl groups. The silicon-containing groups include trimethylsilyl, triethylsilyl, dimethylphenylsilyl, diphenylmethylsilyl and triphenylsilyl groups. Adjacent groups of $R^5$ through $R^{12}$ may be linked together to form a ring. Examples of such substituted fluorenyl groups include benzofluorenyl, dibenzofluorenyl, octahydrodibenzofluorenyl, octamethyloctahydrodibenzofluorenyl and octamethyltetrahydrodicyclopentafluorenyl groups.

In Formula [I], $R^1$, $R^2$, $R^3$ and $R^4$ on the cyclopentadienyl ring are each preferably a hydrogen atom or a C1-20 hydrocarbon group. Examples of the C1-20 hydrocarbon groups include the hydrocarbon groups described above. In a more preferred embodiment, $R^3$ is a C1-20 hydrocarbon group.

In Formula [I], $R^5$ to $R^{12}$ on the fluorene ring are each preferably a C1-20 hydrocarbon group. Examples of the C1-20 hydrocarbon groups include the hydrocarbon groups described above. Adjacent groups of $R^5$ through $R^{12}$ may be linked together to form a ring.

In Formula [I], Y that bridges the cyclopentadienyl ring and the fluorenyl ring is preferably a Group 14 element, more preferably carbon, silicon or germanium, and still more preferably a carbon atom. The substituents $R^{13}$ and $R^{14}$ bonding to Y are each preferably a C1-20 hydrocarbon group, and they may be the same or different and may be linked together to form a ring. Examples of the C1-20 hydrocarbon groups include the hydrocarbon groups described above. More preferably, $R^{14}$ is a C6-20 aryl group. Examples of the aryl groups include the aforementioned unsaturated cyclic hydrocarbon groups, saturated hydrocarbon groups substituted with unsaturated cyclic hydrocarbon groups, and heteroatom-containing unsaturated cyclic hydrocarbon groups. $R^{13}$ and $R^{14}$ may be the same or different and may be linked together to form a ring. Examples of such substituted groups include fluorenylidene, 10-hydroanthracenylidene and dibenzocycloheptadienylidene groups.

In Formula [I], M is preferably a Group 4 transition metal, and more preferably Ti, Zr or Hf. Q is a halogen atom, a hydrocarbon group, an anionic ligand or a neutral ligand capable of coordination by a lone pair of electrons, and may be the same or different from each other. The letter j is an integer of 1 to 4. When j is 2 or greater, the plurality of Q may be the same or different from each other. Examples of the halogen atoms include fluorine, chlorine, bromine and iodine. Examples of the hydrocarbon groups include those described hereinabove. Examples of the anionic ligands include alkoxy groups such as methoxy, tert-butoxy and phenoxy; carboxylate groups such as acetate and benzoate; and sulfonate groups such as mesylate and tosylate. Examples of the neutral ligands capable of coordination by lone-pair electrons include organophosphorus compounds such as trimethylphosphine, triethylphosphine, triphenylphosphine and diphenylmethylphosphine; and ethers such as tetrahydrofuran, diethylether, dioxane and 1,2-dimethoxyethane. It is preferable that at least one Q is a halogen atom or an alkyl group.

Preferred examples of the bridged metallocene compounds include isopropylidene (3-tert-butyl-5-methyl-cyclopentadienyl)(fluorenyl)zirconiu mdichloride, isopropylidene(3-tert-butyl-5-methyl-cyclopentadienyl)(3,6-di-tert-butylfluorenyl)zirconiumdichloride, diphenylmethylene(3-tert-butyl-5-methyl-cyclopentadienyl)(f luorenyl)zirconiumdichloride, diphenylmethylene(3-tert-butyl-5-methyl-cyclopentadienyl)(2 ,7-di-tert-butylfluorenyl)zirconiumdichloride and diphenylmethylene(3-tert-butyl-5-methyl-cyclopentadienyl)(3 ,6-di-tert-butylfluorenyl)zirconiumdichloride.

Metallocene compounds represented by Formula [II] below are also suitably used.

[Chem. 3]

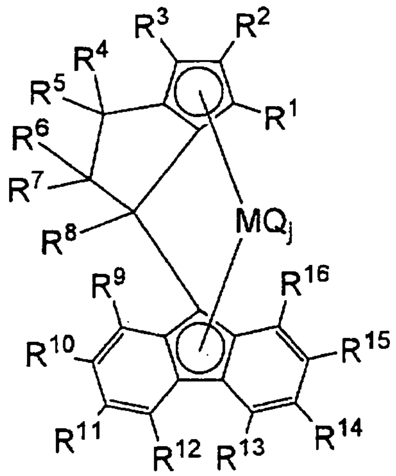

... [II]

In Formula [II], $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$ and $R^{16}$ may be the same or different and are each a hydrogen atom, a hydrocarbon group or a silicon-containing group. Adjacent groups of $R^1$ through $R^{16}$ may be linked together to form a ring. $R^2$ is not an aryl group. The aryl groups used herein refer to aromatic hydrocarbon groups that have a free valence on the conjugated $sp^2$ carbon in the aromatic ring, with examples including phenyl, tolyl and naphthyl groups and excluding benzyl, phenethyl and phenyldimethylsilyl groups. Examples of the hydrocarbon groups include linear hydrocarbon groups such as methyl, ethyl, n-propyl, allyl, n-butyl, n-pentyl, n-hexyl, n-heptyl, n-octyl, n-nonyl and n-decanyl groups; branched hydrocarbon groups such as isopropyl, tert-butyl, amyl, 3-methylpentyl, 1,1-diethylpropyl, 1,1-dimethylbutyl, 1-methyl-1-propylbutyl, 1,1-propylbutyl, 1,1-dimethyl-2-methylpropyl and 1-methyl-1-isopropyl-2-methylpropyl groups; saturated cyclic hydrocarbon groups such as cyclopentyl, cyclohexyl, cycloheptyl, cyclooctyl, norbornyl, adamantyl, methylcyclohexyl and methyladamantyl groups; unsaturated cyclic hydrocarbon groups such as phenyl, tolyl, naphthyl, biphenyl, phenanthryl and anthracenyl groups; saturated hydrocarbon groups substituted with unsaturated cyclic hydrocarbon groups such as benzyl, cumyl, 1,1-diphenylethyl and triphenylmethyl groups; and heteroatom-containing hydrocarbon groups such as methoxy, ethoxy, phenoxy, furyl, N-methylamino, N,N-dimethylamino, N-phenylamino, pyrryl and thienyl groups. The silicon-containing groups include trimethylsilyl, triethylsilyl, dimethylphenylsilyl, diphenylmethylsilyl and triphenylsilyl groups. Adjacent groups of $R^9$ through $R^{16}$ on the fluorenyl ring may be linked together to form a ring. Examples of such substituted fluorenyl groups include benzofluorenyl, dibenzofluorenyl, octahydrodibenzofluorenyl, octamethyloctahydrodibenzofluorenyl and octamethyltetrahydrodicyclopentafluorenyl groups.

In Formula [II], $R^1$ and $R^3$ are preferably hydrogen atoms, at least one of $R^5$ and $R^7$ is preferably a hydrogen atom, and more preferably $R^6$ and $R^7$ are both hydrogen atoms.

In Formula [II], $R^2$ on the cyclopentadienyl ring is not an aryl group, and is preferably a hydrogen atom or a C1-20 hydrocarbon group. Examples of the C1-20 hydrocarbon groups include those described hereinabove. $R^2$ is preferably a hydrocarbon group, more preferably a methyl group, an ethyl group, an isopropyl group or a tert-butyl group, and particularly preferably a tert-butyl group.

$R^4$ and $R^5$ are selected from a hydrogen atom, C1-20 alkyl groups and aryl groups, and are preferably C1-20 hydrocarbon groups. $R^4$ and $R^5$ are more preferably selected from methyl and phenyl groups. Particularly preferably, $R^4$ and $R^5$ are the same.

In Formula [II], $R^9$, $R^{12}$, $R^{13}$ and $R^{16}$ on the fluorene ring are preferably hydrogen atoms.

In Formula [II], M is a Group 4 transition metal such as Ti, Zr or Hf. Q is a halogen atom, a hydrocarbon group, an anionic ligand or a neutral ligand capable of coordination by a lone pair of electrons. The letter j is an integer of 1 to 4. When j is 2 or greater, the plurality of Q may be the same or different from each other. Examples of the halogen atoms include fluorine, chlorine, bromine and iodine. Examples of the hydrocarbon groups include those described hereinabove. Examples of the anionic ligands include alkoxy groups such as methoxy, tert-butoxy and phenoxy; carboxylate groups such as acetate and benzoate; sulfonate groups such as mesylate and tosylate; and amide groups such as dimethylamide, diisopropylamide, methylanilide and diphenylamide. Examples of the neutral ligands capable of coordination by lone-pair electrons include organophosphorus compounds such as trimethylphosphine, triethylphosphine, triphenylphosphine and diphenylmethylphosphine; and ethers such as tetrahydrofuran, diethylether, dioxane and 1,2-dimethoxyethane. It is preferable that at least one Q is a halogen atom or an alkyl group.

Examples of the metallocene compounds represented by Formula [II] include [3-(fluorenyl)(1,2,3,3a-tetrahydropentalene)]zirconiumdichloride, [3-(2',7'-di-tert-butylfluorenyl)(1,2,3,3a-tetrahydropentalene)]zirconiumdichloride, [3-(3',6'-di-tert-butylfluorenyl)(1,2,3,3a-tetrahydropentalene)]zirconiumdichloride, [3-(1',1',4',4',7',7',10',10'-octamethyloctahydrodibenzo[b,h]fluorenyl)(1,2,3,3a-tetrahydropentalene)]zirconiumdichlor ide, [3-(fluorenyl) (1,1,3,5-tetramethyl-1,2,3,3a-tetrahydropentalene)]zirconiumdichloride, [3-(2',7'-di-tert-butylfluorenyl)(1,1,3,5-tetramethyl-1,2,3,3a-tetrahydropentalene)]zirconiumdichloride, [3-(3',6'-di-tert-butylfluorenyl)(1,1,3,5-tetramethyl-1,2,3,3a-tetrahydropentalene)] zirconiumdichloride, [3-(1',1',4',4',7',7',10',10'-octamethyloctahydrodibenzo[b,h]fluorenyl)(1,1,3,5-tetramethyl-1,2,3,3a-tetrahydropentale ne)]zirconiumdichloride, [3-(fluorenyl)(1,1-dimethyl-5-tert-butyl-1,2,3,3a-tetrahydropentalene)]zirconiumdichloride, [3-(2',7'-di-tert-butylfluorenyl) (1,1-dimethyl-5-tert-butyl-1,2,3,3a-tetrahydropentalene)]zirconiumdichloride, [3-(3',6'-di-tert-butylfluorenyl)(1,1-dimethyl-5-tert-butyl-1,2,3,3a-tetrahydropentalene)]zirconiumdichloride, [3-(1', 1', 4', 4', 7', 7', 10', 10'- octamethyloctahydrodibenzo [b, h] fluorenyl) (1,1- dimethyl- 5- tert- butyl- 1,2,3,3a- tetrahydropentalene)]zirconiumdichloride, [3-(fluorenyl)(1,1,3-triethyl-2-methyl-5-tert-butyl-1,2,3,3a-tetrahydropentalene)]zirconiumdichloride, [3-(2',7'-di-tert-butylfluorenyl)(1,1,3-triethyl-2-methyl-5-tert-butyl-1,2,3,3a-tetrahydropentalene)]zirconiumdichloride, [3-(3',6'-di-tert-butylfluorenyl)(1,1,3-triethyl-2-methyl-5-tert-butyl-1,2,3,3a-tetrahydropentalene)]zirconiumdichloride, [3-(1',1',4',4',7',7',10',10'-octamethyloctahydrodibenzo[b,h]fluorenyl) (1,1,3-triethyl-2-methyl-5-tert-butyl-1,2,3,3a-tetrahydropentalene)]zirconiumdichloride, [3-(fluorenyl)(1,3-dimethyl-5-tert-butyl-1,2,3,3a-tetrahydropentalene)]zirconiumdichloride, [3-(2',7'-di-tert-butylfluorenyl)(1,3-dimethyl-5-tert-butyl-1,2,3,3a-tetrahydropentalene)]zirconiumdichloride, [3-(3',6'-di-tert-butylfluorenyl)(1,3-dimethyl-5-tert-butyl-1,2,3,3a-tetrahydropentalene)]zirconiumdichloride, [3-(1',1',4',4',7',7',10',10'-octamethyloctahydrodibenzo[b,h]fluorenyl)(1,3-dimethyl-5-tert-butyl-1,2,3,3a-tetrahydrop entalene)]zirconiumdichloride, [3-(fluorenyl)(1,1,3-trimethyl-5-ethyl-1,2,3,3a-tetrahydrop entalene)]zirconiumdichloride, [3-(2',7'-di-tert-butylfluorenyl)(1,1,3-trimethyl-5-ethyl-1 ,2,3,3a-tetrahydropentalene)]zirconiumdichloride, [3-(3',6'-di-tert-butylfluorenyl)(1,1,3-trimethyl-5-ethyl-1 ,2,3,3a-tetrahydropentalene)]zirconiumdichloride, [3-(1',1',4',4',7',7',10',10'-octamethyloctahydrodibenzo[b, h]fluorenyl)(1,1,3-trimethyl-5-ethyl-1,2,3,3a-tetrahydropen talene)]zirconiumdichloride, [3-(fluorenyl)(1,1,3-trimethyl-5-trimethylsilyl-1,2,3,3a-te trahydropentalene)]zirconiumdichloride, [3-(2',7'-di-tert-butylfluorenyl)(1,1,3-trimethyl-5-trimeth ylsilyl-1,2,3,3a-tetrahydropentalene)]zirconiumdichloride, [3-(3',6'-di-tert-butylfluorenyl)(1,1,3-trimethyl-5-trimeth ylsilyl-1,2,3,3a-tetrahydropentalene)]zirconiumdichloride, [3-(1',1',4',4',7',7',10',10'-octamethyloctahydrodibenzo[b, h]fluorenyl)(1,1,3-trimethyl-5-trimethylsilyl-1,2,3,3a-tetr ahydropentalene)]zirconiumdichloride, [3-(fluorenyl)(3-methyl-5-tert-butyl-1,2,3,3a-tetrahydropen talene)]zirconiumdichloride, [3-(2',7'-di-tert-butylfluorenyl)(3-methyl-5-tert-butyl-1,2 ,3,3a-tetrahydropentalene)]zirconiumdichloride, [3-(3',6'-di-tert-butylfluorenyl) (3-methyl-5-tert-butyl-1,2 ,3,3a-tetrahydropentalene)]zirconiumdichloride, [3-(1',1',4',4',7',7',10',10'-octamethyloctahydrodibenzo[b, h]fluorenyl)(3-methyl-5-tert-butyl-1,2,3,3a-tetrahydropenta lene)]zirconiumdichloride, [3-(fluorenyl)(1-phenyl-3-methyl-5-tert-butyl-1,2,3,3a-tetr ahydropentalene)]zirconiumdichloride, [3-(2',7'-di-tert-butylfluorenyl)(1-phenyl-3-methyl-5-tert-butyl-1,2,3,3a-tetrahydropentalene)]zirconiumdichloride, [3-(3',6'-di-tert-butylfluorenyl)(1-phenyl-3-methyl-5-tert-butyl-1,2,3,3a-tetrahydropentalene)]zirconiumdichloride, [3-(1',1',4',4',7',7',10',10'-octamethyloctahydrodibenzo[b, h]fluorenyl)(1-phenyl-3-methyl-5-tert-butyl-1,2,3,3a-tetrah ydropentalene)]zirconiumdichloride, [3-(fluorenyl)(1-p-tolyl-3-methyl-5-tert-butyl-1,2,3,3a-tet rahydropentalene)]zirconiumdichloride, [3-(2',7'-di-tert-butylfluorenyl)(1-p-tolyl-3-methyl-5-tert -butyl-1,2,3,3a-tetrahydropentalene)]zirconiumdichloride, [3-(3',6'-di-tert-butylfluorenyl)(1-p-tolyl-3-methyl-5-tert -butyl-1,2,3,3a-tetrahydropentalene)]zirconiumdichloride, [3-(1',1',4',4',7',7',10',10'-octamethyloctahydrodibenzo[b, h]fluorenyl)(1-p-tolyl-3-methyl-5-tert-butyl-1,2,3,3a-tetra hydropentalene)]zirconiumdichloride, [3-(fluorenyl)(1,3-diphenyl-5-tert-butyl-1,2,3,3a-tetrahydr opentalene)]zirconiumdichloride, [3-(2',7'-di-tert-butylfluorenyl)(1,3-diphenyl-5-tert-butyl -1,2,3,3a-tetrahydropentalene)]zirconiumdichloride, [3-(3',6'-di-tert-butylfluorenyl)(1,3-diphenyl-5-tert-butyl -1,2,3,3a-tetrahydropentalene)]zirconiumdichloride, [3-(1',1',4',4',7',7',10',10'-octamethyloctahydrodibenzo[b, h]fluorenyl)(1,3-diphenyl-5-tert-butyl-1,2,3,3a-tetrahydrop entalene)]zirconiumdichloride, [3-(fluorenyl)(1,3-diphenyl-1-methyl-5-tert-butyl-1,2,3,3a-tetrahydropentalene)]zirconiumdichloride, [3-(2',7'-di-tert-butylfluorenyl)(1,3-diphenyl-1-methyl-5-t ert-butyl-1,2,3,3a-tetrahydropentalene)]zirconiumdichloride, [3-(3',6'-di-tert-butylfluorenyl)(1,3-diphenyl-1-methyl-5-t ert-butyl-1,2,3,3a-tetrahydropentalene)]zirconiumdichloride, [3-(1',1',4',4',7',7',10',10'-octamethyloctahydrodibenzo[b, h]fluorenyl)(1,3-diphenyl-1-methyl-5-tert-butyl-1,2,3,3a-te trahydropentalene)]zirconiumdichloride, [3-(fluorenyl)(1,3-di(p-tolyl)-1-methyl-5-tert-butyl-1,2,3, 3a-tetrahydropentalene)]zirconiumdichloride, [3-(2',7'-di-tert-but-ylfluorenyl)(1,3-di(p-tolyl)-1-methyl-5-tert-butyl-1,2,3,3a-tetrahydropentalene)]zirconiumdichlor ide, [3-(3',6'-di-tert-butylfluorenyl)(1,3-di(p-tolyl)-1-methyl-5-tert-butyl-1,2,3,3a-tetrahydropentalene)]zirconiumdichlor ide, [3-(1',1',4',4',7',7',10',10'-octamethyloctahydrodibenzo[b, h]fluorenyl)(1,3-di(p-tolyl)-1-methyl-5-tert-butyl-1,2,3,3a -tetrahydropentalene)]zirconiumdichloride, [3-(fluorenyl)(3-phenyl-5-tert-butyl-1,2,3,3a-tetrahydropen talene)]zirconiumdichloride, [3-(2',7'-di-tert-butylfluorenyl)(3-phenyl-5-tert-butyl-1,2 ,3,3a-tetrahydropentalene)]zirconiumdichloride, [3-(3',6'-di-tert-butylfluorenyl)(3-phenyl-5-tert-butyl-1,2 ,3,3a-tetrahydropentalene)]zirconiumdichloride, [3-(1',1',4',4',7',7',10',10'-octamethyloctahydrodibenzo[b, h]fluorenyl)(3-phenyl-5-tert-butyl-1,2,3,3a-tetrahydropenta lene)]zirconiumdichloride, [3-(fluorenyl)(1-methyl-3-phenyl-5-tert-butyl-1,2,3,3a-tetr ahydropentalene)]zirconiumdichloride, [3-(2',7'-di-tert-butylfluorenyl)(1-methyl-3-phenyl-5-tert-butyl-1,2,3,3a-tetrahydropentalene)]zirconiumdichloride, [3-(3',6'-di-tert-butylfluorenyl)(1-methyl-3-phenyl-5-tert-butyl-1,2,3,3a-tetrahydropentalene)]zirconiumdichloride, [3-(1',1',4',4',7',7',10',10'-octamethyloctahydrodibenzo[b, h]fluorenyl)(1-methyl-3-phenyl-5-tert-butyl-1,2,3,3a-tetrah ydropentalene)]zirconiumdichloride, [3-(fluorenyl)(1,1-dimethyl-3-phenyl-5-tert-butyl-1,2,3,3a-tetrahydropentalene)]zirconiumdichloride, [3-(2',7'-di-tert-butylfluorenyl)(1,1-dimethyl-3-phenyl-5-t ert-butyl-1,2,3,3a-tetrahydropentalene)]zirconiumdichloride, [3-(3',6'-di-tert-butylfluorenyl)(1,1-dimethyl-3-phenyl-5-t ert-butyl-1,2,3,3a-tetrahydropentalene)]zirconiumdichloride, [3-(1',1',4',4',7',7',10',10'-octamethyloctahydrodibenzo[b, h]fluorenyl)(1,1-dimethyl-3-phenyl-5-tert-butyl-1,2,3,3a-te trahydropentalene)]zirconiumdichloride, [3-(fluorenyl)(1,1,3-trimethyl-5-tert-butyl-1,2,3,3a-tetrah ydropentalene)]hafniumdichloride, [3-(2',7'-di-tert-butylfluorenyl)(1,1,3-trimethyl-5-tert-bu tyl-1,2,3,3a-tetrahydropentalene)]hafniumdichloride, [3-(3',6'-di-tert-butylfluorenyl)(1,1,3-trimethyl-5-tert-bu tyl-1,2,3,3a-tetrahydropentalene)]hafniumdichloride, [3-(1',1',4',4',7',7',10',10'-octamethyloctahydrodibenzo[b, h]fluorenyl)(1,1,3-trimethyl-5-tert-butyl-1,2,3,3a-tetrahyd ropentalene)]hafniumdichloride, [3-(fluorenyl)(1,1,3-trimethyl-5-tert-butyl-1,2,3,3a-tetrah ydropentalene)]titaniumdichloride, [3-(2',7'-di-tert-butylfluorenyl)(1,1,3-trimethyl-5-tert-bu tyl-1,2,3,3a-tetrahydropentalene)]titaniumdichloride, [3-(3',6'-ditert-butylfluorenyl)(1,1,3-trimethyl-5-tert-but yl-1,2,3,3a-tetrahydropentalene)]titaniumdichloride and [3-(1',1',4',4',7',7',10',10'-octamethyloctahydrodibenzo[b, h]fluorenyl)(1,1,3-trimethyl-5-tert-butyl-1,2,3,3a-tetrahyd ropentalene)]titaniumdichloride. Particularly preferred compounds are [3-(fluorenyl)(1,1,3-trimethyl-5-tert-butyl-1,2,3,3a-tetrah ydropentalene)]zirconiumdichloride, [3-(2',7'-di-tert-butylfluorenyl)(1,1,3-trimethyl-5-tert-bu tyl-1,2,3,3a-tetrahydropentalene)]zirconiumdichloride, [3-(3',6'-di-tert-butylfluorenyl)(1,1,3-trimethyl-5-tert-bu tyl-1,2,3,3a-tetrahydropentalene)]zirconiumdichloride and [3-(1',1',4',4',7',7',10',10'-octamethyloctahydrodibenzo[b, h]fluorenyl)(1,1,3-trimethyl-5-tert-butyl-1,2,3,3a-tetrahyd ropentalene)]zirconiumdichloride.

The metallocene compounds [m] in the invention are not limited to the compounds described above, and compounds satisfying the requirements defined in claims of the invention may be used. The position numbers used in the nomenclature for the above compounds are explained with Formulae [II'] and [II''] below that represent [3-(1',1',4',4',7',7',10',10'-octamethyloctahydrodibenzo[b, h]fluorenyl)(1,1,3-trimethyl-5-tert-butyl-1,2,3,3a-tetrahyd ropentalene)] zirconiumdichloride and [3-(2',7'-di-tert-butylfluorenyl)(1,1,3-trimethyl-5-tert-bu tyl-1,2,3,3a-tetrahydropentalene)]zirconiumdichloride, respectively.

[Chem. 4]

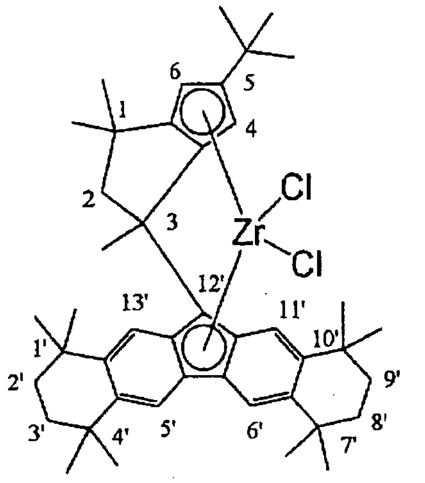

...[II' ]

[Chem. 5]

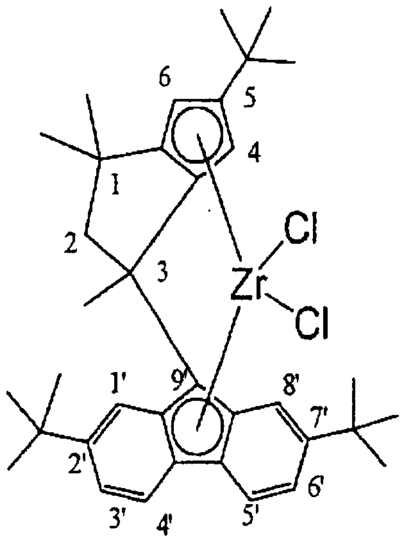

...[II' ' ]

In the metallocene catalysts used in the invention, the organometallic compounds, organoaluminum oxy-compounds, compounds capable of reacting with the transition metal compound to form an ion pair, and optional particulate carriers that are used together with the Group 4 transition metal compounds of Formula [I] or [II] may be compounds disclosed in WO 01/27124 and JP-A-H11-315109 filed by one of the present applicants.

(7) Sheets or films

The sheets or films according to the present invention are obtained from the packaging propylene resin compositions as described hereinabove.

The sheets or films may be produced by molding the packaging propylene resin composition by known methods

such as use of an extruder equipped with a T-die or a circular die at the tip.

The sheets or films may vary in thickness depending on use. Generally, the thickness is 10 μm to 2 mm, and preferably 10 to 200 μm. The films according to the present invention achieve excellent low-temperature impact resistance even if the thickness is relatively small.

The sheets or films may be unstretched or stretched, but unstretched films are preferable.

The sheets or films of the invention may be singly used as single-layer packaging materials such as retort films. They may be laminated with stretched or unstretched polyamide films, uniaxially or biaxially stretched polyester films, aluminum foils or paper to give multilayer retort films. The sheets or films may be used in the form of single-layer films or multilayer films as surface protective films to protect the surface of optical sheets or metals. The sheets or films may be used as medical packaging materials or freshness-keeping packaging materials. In particular, the packaging propylene resin compositions according to the second aspect are suitable as freshness-keeping packaging materials.

EXAMPLES

The present invention will be described in detail hereinbelow based on Examples without limiting the scope of the invention. The following analytical methods were used.

[m1] MFR (melt flow rate)

MFR was measured in accordance with ASTM D 1238 (230°C, 2.16 kg load).

[m2] Melting point (Tm)

The melting point was determined with a differential scanning calorimeter (DSC, manufactured by PerkinElmer Japan Co., Ltd.). An endothermic peak in the third step in the measurement was defined as the melting point (Tm).

(Measurement conditions)

First step: Increase the temperature to 240°C at 10°C/min, and hold it constant for 10 min.

Second step: Lower the temperature to 60°C at 10°C/min.

Third step: Increase the temperature to 240°C at 10°C/min.

[m3] Intrinsic viscosity [η]

The intrinsic viscosity was measured in decalin at 135°C. Approximately 20 mg of a sample was dissolved in 15 ml of decalin, and the specific viscosity ηsp was measured in an oil bath at 135°C. The decalin solution was diluted by addition of 5 ml of decalin, and the specific viscosity ηsp was determined in the same manner. This dilution was performed two more times. The concentration (C) was extrapolated to zero concentration, and the value of ηsp/C was obtained as the intrinsic viscosity.

$[\eta] = \lim (\eta sp/C)\ (C \rightarrow 0)$

[m4] Mw/Mn measurement [weight average molecular weight (Mw), number average molecular weight (Mn)]

These properties were determined by means of GPC-150C Plus (manufactured by Waters Corporation) as follows. Separation columns were TSKgel GMH6-HT and TSKgel GMH6-HTL, each having an inner diameter of 7.5 mm and a length of 600 mm. The column temperature was 140°C. The mobile phase was o-dichlorobenzene (manufactured by Wako Pure Chemical Industries, Ltd.) that contained 0.025 wt% of BHT (manufactured by Wako Pure Chemical Industries, Ltd.) as an antioxidant. The mobile phase was flowed at a rate of 1.0 ml/min. The sample concentration was 0.1 wt%, and 500 μl of the sample was injected. A differential refractometer was used as a detector. Standards used for the measurement were polystyrenes having molecular weights Mw<1000 and Mw>$4x10^6$ (manufactured by Toso Corporation) and polystyrenes having molecular weights 1000≤Mw≤$4x10^6$ (manufactured by Pressure Chemical Co.). The molecular weights were converted in terms of PP using a general calibration method. The Mark-Houwink coefficients of PS and PP described in J. Polym. Sci., Part A-2, 8, 1803 (1970) and Makromol. Chem., 177, 213 (1976) were used.

[m5] Content of 23°C n-decane soluble part ($D_{sol}$)

200 ml of n-decane was added to 5 g of a final product sample (propylene resin composition), and the mixture was heated at 145°C for 30 minutes to give a solution. The solution was cooled to 23°C in about 3 hours and was allowed

to stand for 30 minutes. A precipitate (hereinafter, the 23°C n-decane insoluble part: $D_{insol}$) was filtered. The filtrate was poured into an approximately three-fold amount of acetone, and a component that had been dissolved in n-decane was precipitated. The precipitate (A) was filtered from acetone and was dried. Concentrating the filtrate to dryness did not give any residues. The content of the 23°C n-decane soluble part was determined by the following equation:

Content of 23°C n-decane soluble part (wt%) = [Precipitate (A) weight/Sample weight] x 100

[m6] Content of ethylene-derived structural units

To determine the concentration of ethylene-derived structural units in the propylene/ethylene copolymer (B), $D_{insol}$ and $D_{sol}$, 20-30 mg of a sample was dissolved in 0.6 ml of a 2:1 solution of 1,2,4-trichlorobenzene and deuterated benzene and was analyzed by carbon nuclear magnetic resonance ($^{13}C$-NMR). Propylene, ethylene and α-olefins were quantitatively determined based on dyad chain distribution. For example, the propylene/ethylene copolymer was quantitatively analyzed using the following equations (Eq-1) and (Eq-2):

Propylene (mol%) = (PP+1/2EP) x 100/[(PP+1/2EP)+(1/2EP+EE)] ··· (Eq-1)

Ethylene (mol%) = (1/2EP+EE) x 100/[(PP+1/2EP)+(1/2EP+EE)] ··· (Eq-2)

wherein PP = $S\alpha\alpha$, EP = $S\alpha\gamma+S\alpha\beta$, and EE = $1/2(S\beta\delta+S\delta\delta)+1/4S\gamma\delta$.
In Examples, the ethylene content and the α-olefin content in $D_{insol}$ are expressed in wt%.

[m7] Proportions of 2,1-insertion and 1,3-insertion

A sample weighing 20-30 mg was dissolved in 0.6 ml of a 2:1 solution of 1,2,4-trichlorobenzene and deuterated benzene and was analyzed by carbon nuclear magnetic resonance ($^{13}C$-NMR) . Monomers combined through 2,1-insertion form an irregularly arranged unit represented by Formula (i) in the polymer chain. The proportion of 2,1-propylene monomer insertions relative to all the propylene monomer insertions was calculated by the following equation:

[Form. 1]

$$\text{Proportion of irregularly arranged units by 2,1-insertion (\%)} = \frac{0.5\text{x[area of the methyl groups (at 16.5-17.5 ppm)]}}{\Sigma ICH_3+(I\alpha\delta+I\beta\gamma)/4} \text{ x } 100$$

In the equation, $\Sigma ICH_3$ represents an area of all the methyl groups, and $I\alpha\delta$ and $I\beta\gamma$ represent areas of $\alpha\beta$ peak (at around 37.1 ppm) and $\beta\gamma$ peak (at around 27.3 ppm), respectively. The nomenclature for the methylene peaks was in accordance with the Carman nomenclature (Rubber Chem. Technol., 44 (1971), 781).

The proportion of 1,3-propylene monomer insertions represented by Formula (ii) relative to all the propylene monomer insertions was calculated by the following equation:

[Form. 2]

$$\text{Proportion of irregularly arranged units by 1,3-insertion (\%)} = \frac{(I\alpha\delta+I\beta\gamma)/4}{\Sigma ICH_3+(I\alpha\delta+I\beta\gamma)/4} \times 100$$

[m8] Density

The density of ethylene/$\alpha$-olefin copolymer was measured as follows. A sample was heated at 120°C for 1 hour, then gradually cooled to room temperature linearly in 1 hour, and measured for density in a density gradient tube.

[m9] Rigidity of film

The Young's modulus of a film was measured in accordance with JIS K 6781 to evaluate rigidity.

<Testing conditions>

Temperature: 23°C
Stress rate: 200 mm/min
Distance between chucks: 80 mm

[m10] Impact resistance of film

A 5 cm x 5 cm film was sampled and tested to evaluate impact resistance with an impact tester (in which a hammer was caused to strike the surface from underneath) at a predetermined temperature.

<Testing conditions>

Temperature: -10°C
Hammer: 1-inch tip, 3.0 J load

[m11] Haze of film

The haze was measured in accordance with ASTM D 1003.

[m12] Blocking resistance of film

Films 10 cm in machine direction (MD) and 10 cm in transverse direction (TD) were laminated together through their chill rolled surfaces and were allowed to stand in a thermostat at 50°C under a load of 200 g/$cm^2$ for 3 days. The laminate was then conditioned in a room at 23°C and 50% humidity for more than 24 hours, and the films were separated from each other at 200 mm/min. The peel strength measured was divided by the width of the test piece to give a blocking coefficient. The blocking resistance was evaluated based on the blocking coefficient. The smaller the blocking coefficient, the higher the blocking resistance.

[m13] Heat seal strength of film

A 5 mm wide film was sampled and thermally sealed for a heat sealing time of 1 second under a heat sealing pressure of 0.2 MPa. The ends of the sealed film were pulled away from each other at 300 mm/min, and the maximum strength that withstood separation was measured. The temperatures of upper and lower sealing bars were 200°C and

70°C, respectively.

[m14] Gas permeability of film

Gas permeability was measured in accordance with JIS K 7126 A at 23°C and 0% RH using gas permeability tester MT-C3 manufactured by Toyo Seiki Seisaku-Sho, Ltd.

[m15] Temperature dependency of elastic modulus

The temperature dependency of elastic modulus was measured as an index of heat resistance under the following conditions. In detail, pellets were press molded into a product and the product was tested on a solid viscoelasticity measuring apparatus at various temperatures.

Apparatus: RSA-II (manufactured by TA)
Measurement mode: Tension mode (Auto tension, Auto strain control)
Measurement temperatures: -80 to 150°C (to a measurable temperature)
Heating rate: 3°C/min
Sample size: 5 mm in width x 0.4 mm in thickness
Initial Gap ($L_0$): 21.5 mm
Atmosphere: $N_2$

[Production Example 1a]

Production of propylene block copolymer (C2-1a)

(1) Production of solid catalyst carrier

300 g of $SiO_2$ was sampled in a 1-liter branched flask and mixed with 800 ml of toluene to give a slurry. The slurry was transferred to a 5-liter four-necked flask and 260 ml of toluene was added. Subsequently, 2830 ml of a toluene solution of methyl aluminoxane (hereinafter MAO) (10 wt% solution) was added, and the mixture was stirred at room temperature for 30 minutes. The mixture was then heated to 110°C in 1 hour and reacted for 4 hours. After the completion of the reaction, the reaction liquid was cooled to room temperature. The toluene supernatant was removed, and new toluene was added. This substitution was repeated until the substitution rate reached 95%.

(2) Production of solid catalyst (supporting of metal catalyst component on carrier)

In a glove box, 2.0 g of [3-(1',1',4',4',7',7',10',10'-octamethyloctahydrodibenzo[b, h]fluorenyl)(1,1,3-trimethyl-5-tert-butyl-1,2,3,3a-tetrahyd ropentalene)]zirconiumdichloride was weighed in a 5-liter four-necked flask. The flask was taken outside the glove box, and 0.46 L of toluene and 1.4 L of the MAO/$SiO_2$/toluene slurry prepared in (1) were added under a nitrogen atmosphere. The mixture was stirred for 30 minutes to produce a supported catalyst. The resultant [3-(1',1',4',4',7',7',10',10'-octamethyloctahydrodibenzo[b, h]fluorenyl)(1,1,3-trimethyl-5-tert-butyl-1,2,3,3a-tetrahyd ropentalene)]zirconiumdichloride/MAO/$SiO_2$/toluene slurry was treated with n-heptane to 99% substitution rate. The final slurry volume was controlled to 4.5 L. These operations were carried out at room temperature.

(3) Production of prepolymerized catalyst

A 200-liter autoclave equipped with a stirrer was charged with 404 g of the solid catalyst component prepared in (2), 218 ml of triethylaluminum and 100 L of heptane. While the inside temperature was maintained at 15 to 20°C, 1212 g of ethylene was added and reaction was conducted for 180 minutes with stirring. After the polymerization, the solid was precipitated and the supernatant liquid was removed. The solid was washed with heptane two times. The prepolymerized catalyst thus prepared was resuspended in purified heptane, and the solid catalyst component concentration was adjusted to 4 g/L by controlling the amount of heptane. The prepolymerized catalyst contained 3 g of polyethylene per 1 g of the solid catalyst component.

(4) Polymerization

To a 58-liter tubular polymerization reactor, there were continuously supplied propylene at 30 kg/h, hydrogen at 2 NL/h, the catalyst slurry prepared in (3) at 3.5 g solid catalyst component/h, and triethylaluminum at 2.3 ml/h. Polymerization was carried out in the filled reactor without any gas phase. The temperature and pressure in the tubular

reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.2 mol% in the gas phase. The polymerization temperature and pressure were 70°C and 3.0 MPa/G.

The slurry obtained was transferred to a 2.4-liter clipped tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.52 (molar ratio) and hydrogen/ethylene ≈ 0 (molar ratio). The polymerization temperature and pressure were 70°C and 1.1 MPa/G.

The propylene block copolymer obtained was vacuum dried at 80°C.

[Production Example 2a]

Production of propylene block copolymer (C2-2a)

A packaging propylene resin composition was synthesized in the same manner as in Production Example 1a except that the polymerization was carried out as follows.

(1) Polymerization

To a 58-liter tubular polymerization reactor, there were continuously supplied propylene at 30 kg/h, hydrogen at 1 NL/h, the catalyst slurry prepared in Production Example 1a (3) at 6.2 g solid catalyst component/h, and triethylaluminum at 2.3 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.09 mol% in the gas phase. The polymerization temperature and pressure were 70°C and 3.0 MPa/G.

The slurry obtained was transferred to a 2. 4-liter clipped tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.10 (molar ratio) and hydrogen/ethylene ≈ 0 (molar ratio). The polymerization temperature and pressure were 70°C and 1.1 MPa/G.

The propylene block copolymer obtained was vacuum dried at 80°C.

[Production Example 3a]

Production of propylene block copolymer (C2-3a)

A propylene block copolymer was synthesized in the same manner as in Production Example 1a except that the polymerization was carried out as follows.

(1) Polymerization

To a 58-liter tubular polymerization reactor, there were continuously supplied propylene at 30 kg/h, hydrogen at 1 NL/h, the catalyst slurry prepared in Production Example 1a (3) at 6.2 g solid catalyst component/h, and triethylaluminum at 2.3 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.09 mol% in the gas phase. The polymerization temperature and pressure were 70 °C and 3.0 MPa/G.

The slurry obtained was transferred to a 2. 4-liter clipped tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.10 (molar ratio) and hydrogen/ethylene ≈ 0 (molar ratio). The polymerization temperature and pressure were 70°C and 0.9 MPa/G.

The propylene block copolymer obtained was vacuum dried at 80°C.

[Production Example 4a]

Production of propylene block copolymer (C2-4a)

A propylene block copolymer was synthesized in the same manner as in Production Example 1a except that the polymerization was carried out as follows.

(1) Polymerization

To a 58-liter tubular polymerization reactor, there were continuously supplied propylene at 30 kg/h, hydrogen at 1 NL/h, the catalyst slurry prepared in Production Example 1a (3) at 6.2 g solid catalyst component/h, and triethylaluminum at 2.3 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.09 mol% in the gas phase. The polymerization temperature and pressure were 70°C and 3.0 MPa/G.

The slurry obtained was transferred to a 2. 4-liter clipped tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.20 (molar ratio) and hydrogen/ethylene ≈ 0 (molar ratio). The polymerization temperature and pressure were 70°C and 1.0 MPa/G.

The propylene block copolymer obtained was vacuum dried at 80°C.

[Production Example 5a]

Production of propylene block copolymer (C2-5a)

A propylene block copolymer was synthesized as described below using the solid catalyst carrier prepared in Production Example 1a (1).

(1) Production of solid catalyst (supporting of metal catalyst component on carrier)

In a glove box, 2.0 g of diphenylmethylene(3-t-butyl-5-methylcyclopentadienyl)(2,7-t -butylfluorenyl)zirconiumdichloride was weighed in a 5-liter four-necked flask. The flask was taken outside the glove box, and 0.46 L of toluene and 1.4 L of the MAO/$SiO_2$/toluene slurry prepared in (1) were added under a nitrogen atmosphere. The mixture was stirred for 30 minutes to produce a supported catalyst. The resultant diphenylmethylene(3-t-butyl-5-methylcyclopentadienyl)(2,7-t -butylfluorenyl)zirconiumdichloride/MAO/$SiO_2$/toluene slurry was treated with n-heptane to 99% substitution rate. The final slurry volume was controlled to 4.5 L. These operations were carried out at room temperature.

(2) Production of prepolymerized catalyst

A 200-liter autoclave equipped with a stirrer was charged with 404 g of the solid catalyst component prepared in (1), 218 ml of triethylaluminum and 100 L of heptane. While the inside temperature was maintained at 15 to 20°C, 606 g of ethylene was added and reaction was conducted for 180 minutes with stirring. After the polymerization, the solid was precipitated and the supernatant liquid was removed. The solid was washed with heptane two times. The prepolymerized catalyst thus prepared was resuspended in purified heptane, and the solid catalyst component concentration was adjusted to 4 g/L by controlling the amount of heptane. The prepolymerized catalyst contained 3 g of polyethylene per 1 g of the solid catalyst component.

(3) Polymerization

To a 58-liter tubular polymerization reactor, there were continuously supplied propylene at 30 kg/h, hydrogen at 1 NL/h, the catalyst slurry prepared in (2) at 10.0 g solid catalyst component/h, and triethylaluminum at 2.3 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.05 mol% in the gas phase. The polymerization temperature and pressure were 70°C and 3.0 MPa/G.

The slurry obtained was transferred to a 2. 4-liter clipped tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.10 (molar ratio) and hydrogen/ethylene ≈ 0 (molar ratio). The polymerization temperature and pressure were 70°C and 1.1 MPa/G.

The propylene block copolymer obtained was vacuum dried at 80°C.

[Production Example 6a]

Production of propylene block copolymer (C2-6a)

A propylene block copolymer was synthesized as described below using the solid catalyst carrier prepared in Production Example 1a (1).

(1) Production of solid catalyst (supporting of metal catalyst component on carrier)

In a glove box, 2.0 g of dimethylsilylene bis(2-methyl-4-phenylindenyl)zirconiumdichloride was weighed in a 5-liter four-necked flask. The flask was taken outside the glove box, and 0. 46 L of toluene and 1.4 L of the MAO/$SiO_2$/toluene slurry prepared in (1) were added under a nitrogen atmosphere. The mixture was stirred for 30 minutes to produce a supported catalyst. The resultant dimethylsilylene bis(2-methyl-4-phenylindenyl)zirconiumdichloride/MAO/$SiO_2$/to luene slurry was treated with n-heptane to 99% substitution rate. The final slurry volume was controlled to 4.5 L. These operations were carried out at room temperature.

(2) Production of prepolymerized catalyst

A 200-liter autoclave equipped with a stirrer was charged with 202 g of the solid catalyst component prepared in (1), 109 ml of triethylaluminum and 100 L of heptane. While the inside temperature was maintained at 15 to 20°C, 606 g of ethylene was added and reaction was conducted for 180 minutes with stirring. After the polymerization, the solid was precipitated and the supernatant liquid was removed. The solid was washed with heptane two times. The prepolymerized catalyst thus prepared was resuspended in purified heptane, and the solid catalyst component concentration was adjusted to 2 g/L by controlling the amount of heptane. The prepolymerized catalyst contained 3 g of polyethylene per 1 g of the solid catalyst component.

(3) Polymerization

To a 58-liter tubular polymerization reactor, there were continuously supplied propylene at 30 kg/h, hydrogen at 2 NL/h, the catalyst slurry prepared in (2) at 1.2 g solid catalyst component/h, and triethylaluminum at 2.3 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.14 mol% in the gas phase. The polymerization temperature and pressure were 70°C and 3. 0 MPa/G.

The slurry obtained was transferred to a 2.4-liter clipped tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.45 (molar ratio) and hydrogen/ethylene ≈ 0 (molar ratio). The polymerization temperature and pressure were 70°C and 0.7 MPa/G.

The propylene block copolymer obtained was vacuum dried at 80°C.

[Production Example 7a]

Production of propylene polymer (A-1a)

A propylene polymer was synthesized as described below using the solid catalyst carrier prepared in Production Example 1a (1).

(1) Production of solid catalyst (supporting of metal catalyst component on carrier)

In a glove box, 2.0 g of dimethylmethylene(3-tert-butyl-5-methylcyclopentadienyl)(3, 6-di-tert-butylfluorenyl) zirconiumdichloride was weighed in a 5-liter four-necked flask. The flask was taken outside the glove box, and 0. 46 L of toluene and 1.4 L of the MAO/$SiO_2$/toluene slurry prepared in (1) were added under a nitrogen atmosphere. The mixture was stirred for 30 minutes to produce a supported catalyst. The resultant dimethylmethylene(3-tert-butyl-5-methylcyclopentadienyl)(3, 6-di-tert-butylfluorenyl)zirconiumdichloride/MAO/$SiO_2$/toluen e slurry was treated with n-heptane to 99% substitution rate. The final slurry volume was controlled to 4.5 L. These operations were carried out at room temperature.

(2) Production of prepolymerized catalyst

A 200-liter autoclave equipped with a stirrer was charged with 202 g of the solid catalyst component prepared in (1), 109 ml of triethylaluminum and 100 L of heptane. While the inside temperature was maintained at 15 to 20 °C, 606 g of ethylene was added and reaction was conducted for 180 minutes with stirring. After the polymerization, the solid was precipitated and the supernatant liquid was removed. The solid was washed with heptane two times. The prepolymerized catalyst thus prepared was resuspended in purified heptane, and the solid catalyst component concentration was adjusted to 2 g/L by controlling the amount of heptane. The prepolymerized catalyst contained 3 g of polyethylene per 1 g of the solid catalyst component.

(3) Polymerization

To a 58-liter tubular polymerization reactor, there were continuously supplied propylene at 30 kg/h, hydrogen at 3 NL/h, the catalyst slurry prepared in (2) at 8.0 g solid catalyst component/h, and triethylaluminum at 5.5 ml/h. Polymerization was carried out in the filled reactor without any gas phase. The temperature and pressure in the tubular reactor were 30°C and 3.1 MPa/G.

The slurry obtained was fed to a 1000-liter polymerization vessel equipped with a stirrer and polymerization was further conducted by supplying propylene at 160 kg/h and hydrogen to a hydrogen concentration of 0.07 mol% in the gas phase. The polymerization temperature and pressure were 70°C and 3.0 MPa/G.

The slurry obtained was fed to a 500-liter polymerization vessel equipped with a stirrer and polymerization was further conducted by supplying propylene at 16 kg/h and hydrogen to a hydrogen concentration of 0.07 mol% in the gas phase. The polymerization temperature and pressure were 69°C and 2. 9 MPa/G.

The slurry obtained was fed to a 500-liter polymerization vessel equipped with a stirrer and polymerization was further conducted by supplying propylene at 12 kg/h and hydrogen to a hydrogen concentration of 0.07 mol% in the gas phase. The polymerization temperature and pressure were 68°C and 2. 9 MPa/G.

The slurry obtained was fed to a 500-liter polymerization vessel equipped with a stirrer and polymerization was further conducted by supplying propylene at 17 kg/h and hydrogen to a hydrogen concentration of 0.07 mol% in the gas phase. The polymerization temperature and pressure were 67°C and 2. 8 MPa/G.

The slurry obtained was gasified for gas-solid separation, and a propylene polymer was obtained. The propylene polymer was vacuum dried at 80°C.

[Production Example 8a]

Production of propylene polymer (A-2a)

A propylene polymer was synthesized in the same manner as in Production Example 5a except that the polymerization was carried out as follows.

(1) Polymerization

To a 58-liter tubular polymerization reactor, there were continuously supplied propylene at 57 kg/h, hydrogen

at 4 NL/h, the catalyst slurry prepared in the prepolymerization at 7.1 g solid catalyst component/h, and triethylaluminum at 4.0 ml/h. Polymerization was carried out in the filled reactor without any gas phase. The temperature and pressure in the tubular reactor were 30°C and 2.6 MPa/G.

The slurry obtained was fed to a 1000-liter polymerization vessel equipped with a stirrer and polymerization was further conducted by supplying propylene at 50 kg/h, ethylene at 1.7 kg/h and hydrogen to a hydrogen concentration of 0.16 mol% in the gas phase. The polymerization temperature and pressure were 60°C and 2.5 MPa/G.

The slurry obtained was fed to a 500-liter polymerization vessel equipped with a stirrer and polymerization was further conducted by supplying propylene at 11 kg/h, ethylene at 1.2 kg/h and hydrogen to a hydrogen concentration of 0.16 mol% in the gas phase. The polymerization temperature and pressure were 59°C and 2.4 MPa/G.

The slurry obtained was gasified for gas-solid separation, and a propylene polymer was obtained. The propylene polymer was vacuum dried at 80°C.

[Production Example 9a]

Production of propylene/ethylene copolymer (B-1a)

A propylene/ethylene copolymer was synthesized in the same manner as in Production Example 5a except that the polymerization was carried out as follows.

(1) Polymerization

A 30-liter SUS autoclave that had been sufficiently purged with nitrogen and temperature-controlled at 10°C was charged with 9 kg of liquid propylene, and ethylene was fed at a partial pressure of 0. 5 MPa. The temperature was increased to 45°C while sufficiently stirring the materials. A mixture solution consisting of 0.6 g of the solid catalyst component (in 300 ml of heptane) and 0.5 ml of triethylaluminum was forcibly injected with nitrogen through a catalyst injection pot into the autoclave. Polymerization was carried out at 60°C for 20 minutes and was terminated by addition of methanol. After the polymerization, the autoclave was sufficiently purged of propylene with nitrogen. The propylene/ethylene copolymer obtained was then fractioned and vacuum dried at 80°C.

[Production Example 10a]

Production of propylene/ethylene copolymer (B-2a)

(1) Production of solid titanium catalyst component

952 g of anhydrous magnesium chloride, 4420 ml of decane and 3906 g of 2-ethylhexyl alcohol were heated at 130°C for 2 hours to give a uniform solution. To the solution, 213 g of phthalic anhydride was added and dissolved by stirring at 130°C for 1 hour.

The uniform solution was cooled to 23°C, and 750 ml of the solution was added dropwise to 2000 ml of titanium tetrachloride kept at -20°C, over a period of 1 hour. After the dropwise addition, the liquid mixture was heated to 110°C in 4 hours. When the temperature reached 110°C, 52.2 g of diisobutyl phthalate (DIBP) was added, followed by stirring at the temperature for 2 hours. The solid was collected by hot filtration and was resuspended in 2750 ml of titanium tetrachloride and heated at 110°C for 2 hours.

After the heating, the solid was collected by hot filtration and was washed with decane and hexane at 110°C until no titanium compounds were detected in the washings.

The solid titanium catalyst component prepared as described above was stored as a hexane slurry. A portion of the slurry was dried and the catalyst composition was analyzed. The solid titanium catalyst component was found to contain titanium at 2 wt%, chlorine at 57 wt%, magnesium at 21 wt%, and DIBP at 20 wt%.

(2) Production of prepolymerized catalyst

A 200-liter autoclave equipped with a stirrer was charged with 56 g of the transition metal catalyst component, 9.8 ml of triethylaluminum and 80 L of heptane. While the inside temperature was maintained at 5°C, 560 g of propylene was added and reaction was conducted for 60 minutes with stirring. After the polymerization, the solid was precipitated and the supernatant liquid was removed. The solid was washed with heptane two times. The prepolymerized catalyst thus prepared was resuspended in purified heptane, and the transition metal catalyst component concentration was adjusted to 1.0 g/L by controlling the amount of heptane. The prepolymerized catalyst contained 10 g of polypropylene per 1 g of the transition metal catalyst component.

(3) Polymerization

A 30-liter SUS autoclave that had been sufficiently purged with nitrogen was charged with 9 kg of liquid propylene, and the temperature was increased to 45°C while sufficiently stirring the material. Ethylene was fed at a partial pressure of 0.15 MPa, and 20 NL of hydrogen was supplied. A mixture solution consisting of 0.2 g of the solid catalyst component (in 200 ml of heptane), 2.0 ml of triethylaluminum and 0.4 ml of dicyclopentyldimethoxysilane was forcibly injected with nitrogen through a catalyst injection pot into the autoclave. Polymerization was carried out at 50°C for 15 minutes and was terminated by addition of methanol. After the polymerization, the autoclave was sufficiently purged of propylene with nitrogen. The propylene/ethylene copolymer obtained was then fractioned and vacuum dried at 80°C. The propylene/ethylene copolymer (B-2a) had an ethylene content of 20 mol% and an intrinsic viscosity [η] of 2.1 dl/g.

[Example 1a]

100 parts by weight of the propylene block copolymer (C2-1a) from Production Example 1a was mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (manufactured by FUJI SILYSIA CHEMICAL LTD.). The mixture was melt kneaded in a twin-screw extruder and pelletized to give pellets of a packaging propylene resin composition. The pellets were extruded with a T-die extruder (GT-25A manufactured by PLABOR Co., Ltd.) into a cast film. Properties of the film are set forth in Table 2.

<Melt kneading conditions>

Parallel twin-screw kneader: NR2-36 manufactured by NAKATANI KIKAI K.K.
Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 μm

[Example 2a]

A cast film was produced in the same manner as in Example 1a, except that 100 parts by weight of the propylene block copolymer (C2-1a) was replaced by 100 parts by weight of the propylene block copolymer (C2-2a) from Production Example 2a. Properties of the film are set forth in Table 2.

[Example 3a]

100 parts by weight consisting of 95 parts by weight of the propylene block copolymer (C2-3a) from Production Example 3a and 5 parts by weight of an ethylene/octene copolymer (D-1a) (ENGAGE® 8003 manufactured by DuPont Dow Elastomers, density = 0.885 (g/$cm^3$) were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (manufactured by FUJI SILYSIA CHEMICAL LTD.). The mixture was melt kneaded in a twin-screw extruder and pelletized to give pellets of a propylene resin composition. The pellets were extruded with a T-die extruder (GT-25A manufactured by PLABOR Co., Ltd.) into a cast film. Properties of the film are set forth in Table 2.

<Melt kneading conditions>

Parallel twin-screw kneader: NR2-36 manufactured by NAKATANI KIKAI K.K.
Kneading temperature: 240°C
Screw rotation: 200 rpm

Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 μm

[Example 4a]

A cast film was produced in the same manner as in Example 3a, except that 5 parts by weight of the ethylene/octene copolymer (D-1a) (ENGAGE® 8003 manufactured by DuPont Dow Elastomers, density = 0.885 (g/$cm^3$)) was replaced by 5 parts by weight of an ethylene/octene copolymer (D-2a) (ENGAGE® 8480 manufactured by DuPont Dow Elastomers, density = 0. 902 (g/$cm^3$)). Properties of the film are set forth in Table 2.

[Example 5a]

A cast film was produced in the same manner as in Example 3a, except that 5 parts by weight of the ethylene/octene copolymer (D-1a) (ENGAGE® 8003 manufactured by DuPont Dow Elastomers, density = 0.885 (g/$cm^3$)) was replaced by 5 parts by weight of an ethylene/octene copolymer (D-3a) (ENGAGE® 8100 manufactured by DuPont Dow Elastomers, density = 0. 870 (g/$cm^3$)). Properties of the film are set forth in Table 2.

[Example 6a]

A cast film was produced in the same manner as in Example 1a, except that 100 parts by weight of the propylene block copolymer (C2-1a) was replaced by 100 parts by weight of the propylene block copolymer (C2-5a) from Production Example 5a. Properties of the film are set forth in Table 2.

[Example 7a]

100 parts by weight consisting of 80 parts by weight of the propylene polymer (A-1a) from Production Example 7a and 20 parts by weight of the propylene/ethylene copolymer (B-1a) from Production Example 9a were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (manufactured by FUJI SILYSIA CHEMICAL LTD.). The mixture was melt kneaded in a twin-screw extruder and pelletized to give pellets of a propylene resin composition. The pellets were extruded with a T-die extruder (GT-25A manufactured by PLABOR Co., Ltd.) into a cast film. Properties of the film are set forth in Table 2.

<Melt kneading conditions>

Parallel twin-screw kneader: NR2-36 manufactured by NAKATANI KIKAI K.K.
Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 μm

[Example 8a]

A cast film was produced in the same manner as in Example 7a, except that 80 parts by weight of the propylene polymer (A-1a) was replaced by 80 parts by weight of a Ziegler-Natta catalyzed propylene homopolymer (A-3a) (F102W manufactured by PRIME POLYMER CO., LTD.). Properties of the film are set forth in Table 2.

[Comparative Example 1a]

A cast film was produced in the same manner as in Example 7a, except that 20 parts by weight of the propylene/ethylene copolymer (B-1a) was replaced by 20 parts by weight of the propylene polymer (A-2a) from Production Example 8a. Properties of the film are set forth in Table 2.

[Comparative Example 2a]

A cast film was produced in the same manner as in Example 1a, except that 100 parts by weight of the propylene block copolymer (C2-1a) was replaced by 100 parts by weight of the propylene block copolymer (C2-4a) from Production Example 4a. Properties of the film are set forth in Table 2.

[Comparative Example 3a]

A cast film was produced in the same manner as in Example 1a, except that 100 parts by weight of the propylene block copolymer (C2-1a) was replaced by 100 parts by weight of the propylene block copolymer (C2-6a) from Production Example 6a. Properties of the film are set forth in Table 2.

[Comparative Example 4a]

100 parts by weight consisting of 80 parts by weight of the propylene polymer (A-3a) (F102W manufactured by PRIME POLYMER CO., LTD.) and 20 parts by weight of the propylene/ethylene copolymer (B-2a) from Production Example 10a were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0. 5 part by weight of anti-blocking agent Sylophobic 505 (manufactured by FUJI SILYSIA CHEMICAL LTD.). The mixture was melt kneaded in a twin-screw extruder and pelletized to give pellets of a propylene resin composition. The pellets were extruded with a T-die extruder (GT-25A manufactured by PLABOR Co., Ltd.) into a cast film. Properties of the film are set forth in Table 2.

<Melt kneading conditions>

Parallel twin-screw kneader: NR2-36 manufactured by NAKATANI KIKAI K.K.
Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 μm

[Table 1]

| | | | Prod. Ex. 1a | Prod. Ex. 2a | Prod. Ex. 3a | Prod. Ex. 4a | Prod. Ex. 5a | Prod. Ex. 6a | Prod. Ex. 7a | Prod. Ex. 8a | | Prod. Ex. 9a | Prod. Ex. 10a |
|---|---|---|---|---|---|---|---|---|---|---|---|---|---|
| Polymer | | | C2-1a | C2-2a | C2-3a | C2-4a | C2-5a | C2-6a | A-1a | A-2a | A-3a | B-1a | B-2a |
| Homo part | Tm | °C | 156 | 156 | 156 | 156 | 145 | 148 | 158 | 115 | 160 | - | - |
| | MFR | g/10 min | 8 | 1.5 | 1.5 | 1.5 | 1.4 | 1.4 | 1.7 | 1.5 | 2 | - | - |
| | 1,3-insertion + 2,1-insertion | mol% | 0 | 0 | 0 | 0 | 0 | 0.9 | 0 | 0.1 | 0 | - | - |
| $D_{insol}$ | Content | wt% | 80 | 80 | 84 | 80 | 80 | 79 | <0.5 | <0.5 | <0.5 | 0 | 55 |
| $D_{sol}$ | Content | wt% | 20 | 20 | 16 | 20 | 20 | 21 | - | - | - | 100 | 45 |
| | C2 content | mol% | 20 | 20 | 20 | 30 | 20 | 18 | - | - | - | 20 | 18 |
| | [η] | dl/g | 2.1 | 2.0 | 2.1 | 2.2 | 2.1 | 1.0 | - | - | - | 2.1 | 2.0 |
| | Mw/Mn | | 2.2 | 2.1 | 2.2 | 2.2 | 2.1 | 2.2 | - | - | - | 2.2 | 5.5 |
| Product | MFR | g/10 min | 6 | 2.0 | 1.9 | 1.9 | 2.0 | 4.0 | - | - | - | - | - |

[Table 2]

| | | Ex. 1a | Ex. 2a | Ex. 3a | Ex. 4a | Ex. 5a | Ex. 6a | Ex. 7a | Ex. 8a | Comp. Ex. 1a | Comp. Ex. 2a | Comp. Ex. 3a | Comp. Ex. 4a |
|---|---|---|---|---|---|---|---|---|---|---|---|---|---|
| Propylene block copolymer C2-1a | | 100 | | | | | | | | | | | |
| Propylene block copolymer C2-2a | | | 100 | | | | | | | | | | |
| Propylene block copolymer C2-3a | | | | 95 | 95 | 95 | | | | | | | |
| Propylene block copolymer C2-4a | | | | | | | | | | | 100 | | |
| Propylene block copolymer C2-5a | | | | | | | 100 | | | | | | |
| Propylene block copolymer C2-6a | | | | | | | | | | | | 100 | |
| Propylene polymer A-1a | | | | | | | | 80 | | 80 | | | |
| Propylene polymer A-2a | | | | | | | | | | 20 | | | |
| Propylene polymer A-3a | | | | | | | | | 80 | | | | 80 |
| Propylene/ethylene copolymer B-1a | | | | | | | | 20 | 20 | | | | |
| Propylene/ethylene copolymer B-2a | | | | | | | | | | | | | 20 |
| Ethylene/α-olefin copolymer D-1a | | | | 5 | | | | | | | | | |
| Ethylene/α-olefin copolymer D-2a | | | | | 5 | | | | | | | | |
| Ethylene/α-olefin copolymer D-3a | | | | | | 5 | | | | | | | |

[Table 2] (Continued)

| | | | Ex. 1a | Ex. 2a | Ex. 3a | Ex. 4a | Ex. 5a | Ex. 6a | Ex. 7a | Ex. 8a | Comp. Ex. 1a | Comp. Ex. 2a | Comp. Ex. 3a | Comp. Ex. 4a |
|---|---|---|---|---|---|---|---|---|---|---|---|---|---|---|
| Product (70 µm cast film) | MFR | g/10 min | 6 | 2 | 2 | 2 | 2 | 2 | 2 | 2 | 2 | 2 | 4 | 2 |
| | Young's modulus | MPa | 790 | 800 | 850 | 860 | 900 | 740 | 810 | 840 | 1000 | 850 | 730 | 690 |
| | Impact (0°C) | J/m | 32 | 36 | 40 | 35 | 33 | 37 | 35 | 35 | 7 | 36 | 18 | 30 |
| | Impact (-10°C) | J/m | 11 | 12 | 19 | 14 | 21 | 12 | 11 | 11 | 2 | 18 | 5 | 8 |
| | Seal strength | N/15 mm | 20 | 23 | 26 | 26 | 26 | 20 | 22 | 23 | 25 | 22 | 18 | 19 |
| | HAZE | % | 7 | 7 | 7 | 7 | 7 | 7 | 7 | 7 | 2 | 9 | 7 | 7 |
| | Blocking resistance | mN/cm | 8 | 6 | 6 | 6 | 8 | 6 | 6 | 5 | 3 | 95 | 7 | 10 |

The effects of the C2 content in $D_{sol}$ on film properties will be discussed below based on Examples 1a and 2a and Comparative Example 2a. The packaging propylene resin compositions from Examples 1a and 2a included the propylene block copolymer in which the C2 content in $D_{sol}$ was 20 mol%, whereas the packaging propylene resin composition from Comparative Example 2a included the propylene block copolymer in which the C2 content in $D_{sol}$ was 30 ml%. The compositions from Examples 1a and 2a achieved higher blocking resistance and transparency.

The effects of [η] of $D_{sol}$ on film properties will be discussed below based on Example 6a and Comparative Example 3a. The packaging propylene resin composition from Example 6a included the propylene block copolymer in which [η] of $D_{sol}$ was 2.1 dl/g, whereas the packaging propylene resin composition from Comparative Example 3a included the propylene block copolymer in which [η] of $D_{sol}$ was 1.0 dl/g. The composition from Example 6a having higher $D_{sol}$ [η] achieved excellent impact resistance.

The packaging propylene resin composition from Example 7a included the propylene polymer A1-a and the propylene/ethylene copolymer B1-a. This resin composition was similar to the propylene block copolymer C2-2a described in Example 2a. Example 7a and Example 2a achieved excellent film properties that were almost comparable to each other. This result indicates that the packaging propylene resin compositions of the invention can give films or sheets with excellent transparency, impact strength and blocking resistance irrespective of whether the composition is produced by melt kneading the propylene polymer and the propylene/ethylene copolymer or by synthesizing the propylene block copolymer through polymerization.

Examples 3a, 4a and 5a in which a small amount of the ethylene/α-olefin copolymer was added to the propylene block copolymer C2-2a achieved dramatically improved impact resistance while maintaining transparency and blocking resistance comparable to those in Example C2-2a. This result indicates that the addition of ethylene/α-olefin copolymers to the packaging propylene resin compositions of the invention enables the controlling of film properties as required.

The effects of the propylene/ethylene copolymer (B) on film properties will be discussed below based on Example 8a and Comparative Example 4a. The propylene/ethylene copolymer B-1a used in Example 8a was produced with a metallocene catalyst system, and the packaging propylene resin composition obtained therewith showed excellent transparency, impact strength and impact resistance. The propylene/ethylene copolymer B-2a used in Comparative Example 4a was produced with a Ziegler-Natta catalyst system. The propylene/ethylene copolymer B-2a had a wide molecular weight distribution (Mw/Mn), a low $D_{sol}$ content and a wide composition distribution. Consequently, the film of the packaging propylene resin composition from Comparative Example 4a had low rigidity and was not suited for applications such as high retort films.

[Production Example 1b]

Production of propylene block copolymer (C2-1b)

(1) Production of solid catalyst carrier

300 g of $SiO_2$ was sampled in a 1-liter branched flask and mixed with 800 ml of toluene to give a slurry. The slurry was transferred to a 5-liter four-necked flask and 260 ml of toluene was added. Subsequently, 2830 ml of a toluene solution of methyl aluminoxane (hereinafter MAO) (10 wt% solution) was added, and the mixture was stirred at room temperature for 30 minutes. The mixture was then heated to 110°C in 1 hour and reacted for 4 hours. After the completion of the reaction, the reaction liquid was cooled to room temperature. The toluene supernatant was removed, and new toluene was added. This substitution was repeated until the substitution rate reached 95%.

(2) Production of solid catalyst (supporting of metal catalyst component on carrier)

In a glove box, 2.0 g of [3-(1',1',4',4',7',7',10',10'-octamethyloctahydrodibenzo[b, h]fluorenyl)(1,1,3-trimethyl-5-tert-butyl-1,2,3,3a-tetrahyd ropentalene)]zirconiumdichloride was weighed in a 5-liter four-necked flask. The flask was taken outside the glove box, and 0.46 L of toluene and 1.4 L of the MAO/$SiO_2$/toluene slurry prepared in (1) were added under a nitrogen atmosphere. The mixture was stirred for 30 minutes to produce a supported catalyst. The resultant [3-(1',1',4',4',7',7',10',10'-octamethyloctahydrodibenzo[b, h]fluorenyl)(1,1,3-trimethyl-5-tert-butyl-1,2,3,3a-tetrahyd ropentalene)]zirconiumdichloride/MAO/$SiO_2$/toluene slurry was treated with n-heptane to 99% substitution rate. The final slurry volume was controlled to 4.5 L. These operations were carried out at room temperature.

(3) Production of prepolymerized catalyst

A 200-liter autoclave equipped with a stirrer was charged with 404 g of the solid catalyst component prepared in (2), 218 ml of triethylaluminum and 100 L of heptane. While the inside temperature was maintained at 15 to 20°C, 1212 g of ethylene was added and reaction was conducted for 180 minutes with stirring. After the polymerization, the

solid was precipitated and the supernatant liquid was removed. The solid was washed with heptane two times. The prepolymerized catalyst thus prepared was resuspended in purified heptane, and the solid catalyst component concentration was adjusted to 6 g/L by controlling the amount of heptane. The prepolymerized catalyst contained 3 g of polyethylene per 1 g of the solid catalyst component.

(4) Polymerization

To a 58-liter jacketed circulation tubular polymerization reactor, there were continuously supplied propylene at 30 kg/h, hydrogen at 2 NL/h, the catalyst slurry prepared in (3) at 5.8 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.07 mol% in the gas phase. The polymerization temperature and pressure were 70°C and 3. 0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.18 (molar ratio) and hydrogen/ethylene ≈ 0 (molar ratio). The polymerization temperature and pressure were 70°C and 0.8 MPa/G.

The propylene block copolymer (C2-1b) obtained was vacuum dried at 80°C.

[Production Example 2b]

Production of propylene block copolymer (C2-2b)

A propylene block copolymer was synthesized as described below using the solid catalyst carrier prepared in Production Example 1b (1).

(1) Production of solid catalyst (supporting of metal catalyst component on carrier)

In a glove box, 2.0 g of diphenylmethylene(3-t-butyl-5-methylcyclopentadienyl)(2,7-t -butylfluorenyl)zirconiumdichloride was weighed in a 5-liter four-necked flask. The flask was taken outside the glove box, and 0.46 L of toluene and 1.4 L of the MAO/$SiO_2$/toluene slurry prepared in (1) were added under a nitrogen atmosphere. The mixture was stirred for 30 minutes to produce a supported catalyst. The resultant diphenylmethylene(3-t-butyl-5-methylcyclopentadienyl)(2,7-t -butylfluorenyl)zirconiumdichloride/MAO/$SiO_2$/toluene slurry was treated with n-heptane to 99% substitution rate. The final slurry volume was controlled to 4.5 L. These operations were carried out at room temperature.

(2) Production of prepolymerized catalyst

A 200-liter autoclave equipped with a stirrer was charged with 404 g of the solid catalyst component prepared in (1), 218 ml of triethylaluminum and 100 L of heptane. While the inside temperature was maintained at 15 to 20°C, 606 g of ethylene was added and reaction was conducted for 180 minutes with stirring. After the polymerization, the solid was precipitated and the supernatant liquid was removed. The solid was washed with heptane two times. The prepolymerized catalyst thus prepared was resuspended in purified heptane, and the solid catalyst component concentration was adjusted to 6 g/L by controlling the amount of heptane. The prepolymerized catalyst contained 3 g of polyethylene per 1 g of the solid catalyst component.

(3) Polymerization

To a 58-liter jacketed circulation tubular polymerization reactor, there were continuously supplied propylene at 30 kg/h, hydrogen at 2 NL/h, the catalyst slurry prepared in (2) at 10.9 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.02 mol% in the gas phase. The polymerization temperature and pressure were 70°C and 3. 0 MPa/G.

The slurry obtained was transferred to a 2.4-liter liquid-transfer tube and was gasified for gas-solid separation.

The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.19 (molar ratio) and hydrogen/ethylene ≈ 0 (molar ratio). The polymerization temperature and pressure were 70°C and 0.9 MPa/G.

The propylene block copolymer (C2-2b) obtained was vacuum dried at 80°C.

[Production Example 3b]

Production of propylene block copolymer (C2-3b)

A propylene block copolymer (C2-3b) was synthesized in the same manner as in Production Example 3b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (2) at 10.9 g solid catalyst component/h; and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.02 mol% in the gas phase. The polymerization temperature and pressure were 70°C and 3.0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.19 (molar ratio) and hydrogen/ethylene ≈ 0 (molar ratio). The polymerization temperature and pressure were 70°C and 1.1 MPa/G.

The propylene block copolymer (C2-3b) obtained was vacuum dried at 80°C.

[Production Example 4b]

Production of propylene block copolymer (C2-4b)

A propylene block copolymer (C2-4b) was synthesized in the same manner as in Production Example 2b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (2) at 10.9 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.02 mol% in the gas phase. The polymerization temperature and pressure were 70°C and 3. 0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.19 (molar ratio) and hydrogen/ethylene ≈ 0 (molar ratio). The polymerization temperature and pressure were 70°C and 0.6 MPa/G.

The propylene block copolymer (C2-4b) obtained was vacuum dried at 80°C.

[Production Example 5b]

Production of propylene block copolymer (C2-5b)

A propylene block copolymer (C2-5b) was synthesized in the same manner as in Production Example 2b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (2) at 7.0 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.08 mol% in the gas phase. The polymerization temperature and pressure were 70°C and 3.0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.19 (molar ratio) and hydrogen/ethylene ≈ 0 (molar ratio). The polymerization temperature and pressure were 70°C and 0.8 MPa/G.

The propylene block copolymer (C2-5b) obtained was vacuum dried at 80°C.

[Production Example 6b]

Production of propylene block copolymer (C2-6b)

A propylene block copolymer (C2-6b) was synthesized in the same manner as in Production Example 2b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (2) at 10.9 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.02 mol% in the gas phase. The polymerization temperature and pressure were 70°C and 3.0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.09 (molar ratio) and hydrogen/ethylene ≈ 0 (molar ratio). The polymerization temperature and pressure were 70°C and 1.0 MPa/G.

The propylene block copolymer (C2-6b) obtained was vacuum dried at 80°C.

[Production Example 7b]

Production of propylene block copolymer (C2-7b)

A propylene block copolymer (C2-7b) was synthesized in the same manner as in Production Example 2b except that the polymerization was carried out as follows.

(1) Polymerization

To a 58-liter jacketed circulation tubular polymerization reactor, there were continuously supplied propylene at

30 kg/h, hydrogen at 2 NL/h, the catalyst slurry prepared in (2) at 11.0 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.02 mol% in the gas phase. The polymerization temperature and pressure were 70°C and 3. 0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.50 (molar ratio) and hydrogen/ethylene ≈ 0 (molar ratio). The polymerization temperature and pressure were 70°C and 0.7 MPa/G.

The propylene block copolymer (C2-7b) obtained was vacuum dried at 80°C.

[Production Example 8b]

Production of propylene block copolymer (C2-8b)

A propylene block copolymer (C2-8b) was synthesized in the same manner as in Production Example 2b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (2) at 11.0 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.02 mol% in the gas phase. The polymerization temperature and pressure were 70°C and 3.0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0. 19 (molar ratio) and hydrogen/ethylene = 0. 001 (molar ratio) . The polymerization temperature and pressure were 70°C and 0.7 MPa/G.

The propylene block copolymer (C2-8b) obtained was vacuum dried at 80°C.

[Production Example 9b]

Production of propylene polymer (A-1b)

A propylene polymer (A-1b) was synthesized in the same manner as in Production Example 1b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (3) at 5.8 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.07 mol% in the gas phase. The polymerization temperature and pressure were 70°C and 3.0 MPa/G.

The slurry obtained was gasified for gas-solid separation. The propylene polymer (A-1b) thus obtained was vacuum dried at 80°C.

[Production Example 10b]

Production of propylene polymer (I'-1b)

(1) Production of solid titanium catalyst component

952 g of anhydrous magnesium chloride, 4420 ml of decane and 3906 g of 2-ethylhexyl alcohol were heated at 130°C for 2 hours to give a uniform solution. To the solution, 213 g of phthalic anhydride was added and dissolved by stirring at 130°C for 1 hour.

The uniform solution was cooled to 23°C, and 750 ml of the solution was added dropwise to 2000 ml of titanium tetrachloride kept at -20°C, over a period of 1 hour. After the dropwise addition, the liquid mixture was heated to 110°C in 4 hours. When the temperature reached 110°C, 52.2 g of diisobutyl phthalate (DIBP) was added, followed by stirring at the temperature for 2 hours. The solid was collected by hot filtration and was resuspended in 2750 ml of titanium tetrachloride and heated at 110°C for 2 hours.

After the heating, the solid was collected by hot filtration and was washed with decane and hexane at 110°C until no titanium compounds were detected in the washings.

The solid titanium catalyst component prepared as described above was stored as a hexane slurry. A portion of the slurry was dried and the catalyst composition was analyzed. The solid titanium catalyst component was found to contain titanium at 2 wt%, chlorine at 57 wt%, magnesium at 21 wt%, and DIBP at 20 wt%.

(2) Production of prepolymerized catalyst

A 200-liter autoclave equipped with a stirrer was charged with 56 g of the transition metal catalyst component, 20.7 ml of triethylaluminum, 7.0 ml of 2-isobutyl-2-isopropyl-1,3-dimethoxypropane and 80 L of heptane. While the inside temperature was maintained at 5°C, 560 g of propylene was added and reaction was conducted for 60 minutes with stirring. After the polymerization, the solid was precipitated and the supernatant liquid was removed. The solid was washed with heptane two times. The prepolymerized catalyst thus prepared was resuspended in purified heptane, and the transition metal catalyst component concentration was adjusted to 0.7 g/L by controlling the amount of heptane. The prepolymerized catalyst contained 10 g of polypropylene per 1 g of the transition metal catalyst component.

(3) Polymerization

To a 58-liter jacketed circulation tubular polymerization reactor, there were continuously supplied propylene at 30 kg/h, hydrogen at 9 NL/h, the catalyst slurry at 0.33 g solid catalyst component/h, triethylaluminum at 3.8 ml/h, and dicyclopentyldimethoxysilane at 1.3 ml/h. Polymerization was carried out in the filled reactor without any gas phase. The temperature and pressure in the tubular reactor were 70°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.4 mol% in the gas phase. The polymerization temperature and pressure were 70°C and 3.0 MPa/G.

The slurry obtained was gasified for gas-solid separation. The propylene polymer (I'-1b) thus obtained was vacuum dried at 80°C.

[Production Example 11b]

Production of propylene polymer (I'-2b)

A propylene polymer (I'-2b) was synthesized in the same manner as in Production Example 1b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (3) at 4.8 g solid catalyst component/h, and triethylaluminum at 2.5 ml/h. Polymerization was carried out in the filled reactor without any gas phase. The temperature and pressure in the tubular reactor were 30°C and 3.2 MPa/G.

The slurry obtained was fed to a 100-liter polymerization vessel equipped with a stirrer and polymerization was further conducted by supplying propylene at 15 kg/h, hydrogen to a hydrogen concentration of 0.07 mol% in the gas phase, and ethylene to an ethylene concentration of 1.8 mol% in the gas phase. The polymerization temperature and

pressure were 70°C and 3.1 MPa/G.

The slurry obtained was gasified for gas-solid separation. The propylene polymer (I'-2b) thus obtained was vacuum dried at 80°C.

[Production Example 12b]

Production of propylene/ethylene copolymer (B-1b)

A propylene/ethylene copolymer (B-1b) was synthesized in the same manner as in Production Example 2b except that the polymerization was carried out as follows.

(1) Polymerization

A 30-liter SUS autoclave that had been sufficiently purged with nitrogen and temperature-controlled at 10°C was charged with 9 kg of liquid propylene, and ethylene was fed at a partial pressure of 0.7 MPa. The temperature was increased to 45°C while sufficiently stirring the materials. A mixture solution consisting of 0.6 g of the solid catalyst component (in 300 ml of heptane) and 0. 5 ml of triethylaluminum was forcibly injected with nitrogen through a catalyst injection pot into the autoclave. Polymerization was carried out at 60°C for 20 minutes and was terminated by addition of methanol. After the polymerization, the autoclave was sufficiently purged of propylene with nitrogen. The propylene/ethylene copolymer (B-1b) obtained was then fractioned and vacuum dried at 80°C.

[Production Example 13b]

Production of propylene/ethylene copolymer (B-2b)

A propylene/ethylene copolymer (B-2b) was synthesized in the same manner as in Production Example 10b except that the polymerization was carried out as follows.

(1) Polymerization

A 30-liter SUS autoclave that had been sufficiently purged with nitrogen was charged with 9 kg of liquid propylene, and the temperature was increased to 45°C while sufficiently stirring the material. Ethylene was fed at a partial pressure of 0.25 MPa, and 42 NL of hydrogen was supplied. A mixture solution consisting of 0.05 g of the solid catalyst component (in 200 ml of heptane), 0.5 ml of triethylaluminum and 0.05 ml of dicyclopentyldimethoxysilane was forcibly injected with nitrogen through a catalyst injection pot into the autoclave. Polymerization was carried out at 50°C for 15 minutes and was terminated by addition of methanol. After the polymerization, the autoclave was sufficiently purged of propylene with nitrogen. The propylene/ethylene copolymer (B-2b) obtained was then fractioned and vacuum dried at 80°C.

The results are set forth in Tables 3 and 4.

[Table 3]

| | | | Prod. Ex. 1b | Prod. Ex. 2b | Prod. Ex. 3b | Prod. Ex. 4b | Prod. Ex. 5b | Prod. Ex. 6b | Prod. Ex. 7b | Prod. Ex. 8b |
|---|---|---|---|---|---|---|---|---|---|---|
| Polymer | | | C2-1b | C2-2b | C2-3b | C2-4b | C2-5b | C2-6b | C2-7b | C2-8b |
| Catalyst system | | | M1 | M2 | M2 | M2 | M2 | M2 | M2 | M2 |
| Homo part | Tm | °C | 156 | 145 | 145 | 145 | 145 | 145 | 145 | 145 |
| | MFR | g/10 min | 1.5 | 1.5 | 1.5 | 1.5 | 8 | 1.5 | 1.4 | 1.4 |
| | 1,3-insertion + 2,1-insertion | mol% | 0 | 0.1 | 0.1 | 0.1 | 0.1 | 0.1 | 0.1 | 0.1 |
| $D_{insol}$ | Content | wt% | 80 | 80 | 75 | 87 | 80 | 80 | 80 | 80 |
| | Mw/Mn | | 2.2 | 2.1 | 2.2 | 2.1 | 2.2 | 2.1 | 2.2 | 2.1 |

(continued)

| | | | Prod. Ex. 1b | Prod. Ex. 2b | Prod. Ex. 3b | Prod. Ex. 4b | Prod. Ex. 5b | Prod. Ex. 6b | Prod. Ex. 7b | Prod. Ex. 8b |
|---|---|---|---|---|---|---|---|---|---|---|
| $D_{sol}$ | Content | wt% | 20 | 20 | 25 | 13 | 20 | 20 | 20 | 20 |
| | C2 content | mol% | 29 | 30 | 29 | 30 | 29 | 13 | 54 | 30 |
| | [η] | dl/g | 2.0 | 2.1 | 2.1 | 2.1 | 2.1 | 2.1 | 2.0 | 1.4 |
| | Mw/Mn | | 2.2 | 2.1 | 2.2 | 2.2 | 2.2 | 2.2 | 2.1 | 2.0 |
| Product | MFR | g/10 min | 1.7 | 1.6 | 1.7 | 1.6 | 7 | 1.9 | 2.0 | 3.1 |

[Table 4]

| | | | Prod. Ex. 9b | Prod. Ex. 10b | Prod. Ex. 11b | Prod. Ex. 12b | Prod. Ex. 13b |
|---|---|---|---|---|---|---|---|
| Polymer | | | A-1b | I'-1b | I'-2b | B-1b | B-2b |
| Catalyst system | | | M1 | ZN | M1 | M2 | ZN |
| Homo part | Tm | °C | 158 | 160 | 138 | - | - |
| | MFR | g/10 min | 1.7 | 1.8 | 1.5 | - | - |
| | 1,3-insertion + 2,1-insertion | mol% | 0 | 0 | 0.1 | - | - |
| $D_{insol}$ | Content | wt% | 99.5< | 99.5< | 99.5< | 0 | 22 |
| | Mw/Mn | | 2.1 | 5.3 | 5.2 | - | - |
| $D_{sol}$ | Content | wt% | <0.5 | <0.5 | <0.5 | 100 | 78 |
| | C2 content | mol% | - | - | - | 30 | 30 |
| | [η] | dl/g | - | - | - | 2.1 | 2.1 |
| | Mw/Mn | | - | - | - | 2.2 | 5.5 |
| Product | MFR | g/10 min | 1.7 | 1.8 | 2.0 | - | - |

[Example 1b]

100 parts by weight of the propylene block copolymer (C2-1b) from Production Example 1b was mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (AB agent 1, particle diameter: 3. 9 μm, manufactured by FUJI SILYSIA CHEMICAL LTD.). The mixture was melt kneaded in a twin-screw extruder and pelletized to give pellets of a polypropylene resin composition. The pellets were extruded with a T-die extruder (GT-25A manufactured by PLABOR Co., Ltd.) into a cast film. Properties of the film are set forth in Table 5.

<Melt kneading conditions>

Parallel twin-screw kneader: NR2-36 manufactured by NAKATANI KIKAI K.K.
Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 μm

[Example 2b]

A cast film was produced in the same manner as in Example 1b, except that 100 parts by weight of the propylene block copolymer (C2-1b) was replaced by 100 parts by weight of the propylene block copolymer (C2-2b) from Production Example 2b. Properties of the film are set forth in Table 5.

[Example 3b]

A cast film was produced in the same manner as in Example 1b, except that 100 parts by weight of the propylene block copolymer (C2-1b) was replaced by 100 parts by weight of the propylene block copolymer (C2-2b) from Production Example 2b and that the amount of anti-blocking agent Sylophobic 505 (AB agent 1) was changed from 0.5 part by weight to 0. 3 part by weight. Properties of the film are set forth in Table 5.

[Example 4b]

A cast film was produced in the same manner as in Example 1b, except that 100 parts by weight of the propylene block copolymer (C2-1b) was replaced by 100 parts by weight of the propylene block copolymer (C2-2b) from Production Example 2b and that 0.5 part by weight of anti-blocking agent Sylophobic 505 (AB agent 1) was replaced by 0. 5 part by weight of Sylophobic 704 (AB agent 2, particle diameter: 6.2 μm, manufactured by FUJI SILYSIA CHEMICAL LTD.). Properties of the film are set forth in Table 5.

[Example 5b]

A cast film was produced in the same manner as in Example 1b, except that 100 parts by weight of the propylene block copolymer (C2-1b) was replaced by 100 parts by weight of the propylene block copolymer (C2-2b) from Production Example 2b and that the amount of anti-blocking agent Sylophobic 505 (AB agent 1) was changed from 0.5 part by weight to 0 part by weight (the anti-blocking agent was not used). Properties of the film are set forth in Table 5.

[Example 6b]

100 parts by weight consisting of 80 parts by weight of the propylene block copolymer (C2-3b) from Production Example 3b and 20 parts by weight of the propylene polymer (A-1b) from Production Example 9b were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (AB agent 1, manufactured by FUJI SILYSIA CHEMICAL LTD.). The mixture was melt kneaded in a twin-screw extruder and pelletized to give pellets of a polypropylene resin composition. The pellets were extruded with a T-die extruder (GT-25A manufactured by PLABOR Co., Ltd.) into a cast film. Properties of the film are set forth in Table 5.

<Melt kneading conditions>

Parallel twin-screw kneader: NR2-36 manufactured by NAKATANI KIKAI K.K.
Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C

Chill roll temperature: 30°C
Take-up speed: about 4.5 m/min
Film thickness: 70 μm

[Example 7b]

A cast film was produced in the same manner as in Example 6b, except that the propylene polymer (A-1b) was replaced by the propylene polymer (I'-1b) from Production Example 10b. Properties of the film are set forth in Table 5.

[Example 8b]

100 parts by weight consisting of 90 parts by weight of the propylene block copolymer (C2-4b) from Production Example 4b and 10 parts by weight of a linear low density polyethylene (ethylene/α-olefin copolymer (D-1), Evolue® SP1510, density = 0.915 g/$cm^3$, manufactured by PRIME POLYMER CO., LTD.) were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (manufactured by FUJI SILYSIA CHEMICAL LTD.). The mixture was melt kneaded in a twin-screw extruder and pelletized to give pellets of a polypropylene resin composition. The pellets were extruded with a T-die extruder (GT-25A manufactured by PLABOR Co. , Ltd.) into a cast film. Properties of the film are set forth in Table 5.

<Melt kneading conditions>

Parallel twin-screw kneader: NR2-36 manufactured by NAKATANI KIKAI K.K.
Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 μm

[Example 9b]

A cast film was produced in the same manner as in Example 1b, except that 100 parts by weight of the propylene block copolymer (C2-1b) was replaced by 100 parts by weight of the propylene block copolymer (C2-5b) from Production Example 5b. Properties of the film are set forth in Table 5.

[Example 10b]

100 parts by weight consisting of 80 parts by weight of the propylene copolymer (A-1b) from Production Example 9b and 20 parts by weight of the propylene/ethylene copolymer (B-1b) from Production Example 12b were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (AB agent 1, manufactured by FUJI SILYSIA CHEMICAL LTD.). The mixture was melt kneaded in a twin-screw extruder and pelletized to give pellets of a polypropylene resin composition. The pellets were extruded with a T-die extruder (GT-25A manufactured by PLABOR Co. , Ltd.) into a cast film. Properties of the film are set forth in Table 5.

<Melt kneading conditions>

Parallel twin-screw kneader: NR2-36 manufactured by NAKATANI KIKAI K.K.
Kneading temperature: 240°C
Screw rotation: 200 rpm

Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 μm

[Table 5]

| | | | Ex. 1b | Ex. 2b | Ex. 3b | Ex. 4b | Ex. 5b | Ex. 6b | Ex. 7b | Ex. 8b | Ex. 9b | Ex. 10b |
|---|---|---|---|---|---|---|---|---|---|---|---|---|
| Propylene block copolymer C2-1b | | | 100 | | | | | | | | | |
| Propylene block copolymer C2-2b | | | | 100 | 100 | 100 | 100 | | | | | |
| Propylene block copolymer C2-3b | | | | | | | | 80 | 80 | | | |
| Propylene block copolymer C2-4b | | | | | | | | | | 90 | | |
| Propylene block copolymer C2-5b | | | | | | | | | | | 100 | |
| Propylene polymer A-1b | | | | | | | | 20 | | | | 80 |
| Propylene polymer I'-1b | | | | | | | | | 20 | | | |
| Propylene/ethylene copolymer B-1b | | | | | | | | | | | | 20 |
| Ethylene/α-olefin copolymer D-1b | | | | | | | | | | 10 | | |
| AB agent 1 | | | 0.5 | 0.5 | 0.3 | | | 0.5 | 0.5 | 0.5 | 0.5 | 0.5 |
| AB agent 2 | | | | | | 0.3 | | | | | | |
| Product (70 μm cast film) | MFR | g/10 min | 1.7 | 1.6 | 1.6 | 1.6 | 1.6 | 1.7 | 1.8 | 1.7 | 7 | 1.8 |
| | Young's modulus | MPa | 1000 | 740 | 730 | 730 | 720 | 810 | 800 | 830 | 800 | 1010 |
| | Impact (0°C) | kJ/m | 25 | 39 | 39 | 38 | 39 | 39 | 32 | 39 | 30 | 23 |
| | Impact (-10°C) | kJ/m | 8 | 34 | 33 | 34 | 34 | 34 | 32 | 20 | 17 | 8 |
| | Seal strength | N/15 mm | 26 | 24 | 25 | 25 | 24 | 26 | 26 | 27 | 19 | 25 |
| | HAZE | % | 10 | 9 | 7 | 7 | 3 | 8 | 10 | 7 | 9 | 10 |
| | Blocking resistance | mN/cm | 10 | 14 | 28 | 14 | 300 | 14 | 14 | 4 | 95 | 10 |

[Comparative Example 1b]

A cast film was produced in the same manner as in Example 1b, except that 100 parts by weight of the propylene block copolymer (C2-1b) was replaced by 100 parts by weight of the propylene block copolymer (C2-6b) from Production Example 6b. Properties of the film are set forth in Table 6.

[Comparative Example 2b]

A cast film was produced in the same manner as in Example 1b, except that 100 parts by weight of the propylene block copolymer (C2-1b) was replaced by 100 parts by weight of the propylene block copolymer (C2-7b) from Production Example 7b. Properties of the film are set forth in Table 6.

[Comparative Example 3b]

A cast film was produced in the same manner as in Example 1b, except that 100 parts by weight of the propylene block copolymer (C2-1b) was replaced by 100 parts by weight of the propylene block copolymer (C2-8b) from Production Example 8b. Properties of the film are set forth in Table 6.

[Comparative Example 4b]

100 parts by weight consisting of 80 parts by weight of the propylene polymer (I'-1b) from Production Example 10b and 20 parts by weight of the propylene/ethylene copolymer (B-2b) from Production Example 13b were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (AB agent 1, manufactured by FUJI SILYSIA CHEMICAL LTD.). The mixture was melt kneaded in a twin-screw extruder and pelletized to give pellets of a polypropylene resin composition. The pellets were extruded with a T-die extruder (GT-25A manufactured by PLABOR Co. , Ltd.) into a cast film. Properties of the film are set forth in Table 6.

<Melt kneading conditions>

Parallel twin-screw kneader: NR2-36 manufactured by NAKATANI KIKAI K.K.
Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 $\mu$m

[Comparative Example 5b]

100 parts by weight consisting of 80 parts by weight of the propylene polymer (I'-2b) from Production Example 11b and 20 parts by weight of the propylene/ethylene copolymer (B-1b) from Production Example 12b were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (manufactured by FUJI SILYSIA CHEMICAL LTD.). The mixture was melt kneaded in a twin-screw extruder and pelletized to give pellets of a polypropylene resin composition. The pellets were extruded with a T-die extruder (GT-25A manufactured by PLABOR Co., Ltd.) into a cast film. Properties of the film are set forth in Table 6.

<Melt kneading conditions>

Parallel twin-screw kneader: NR2-36 manufactured by NAKATANI KIKAI K.K.

Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 4.5 m/min
Film thickness: 70 μm
The effects of the composition of $D_{sol}$ on film properties are shown in Table 7. Example 2b achieved excellent balance in rigidity, impact resistance and transparency, showing that the film is suitable as transparent retort films or protective films. Comparative Example 1b achieved excellent transparency but resulted in poor impact resistance, and the film is not suited for use as retort films. Comparative Example 2b achieved good rigidity and impact resistance but resulted in poor transparency, and the film is not suitable as transparent retort films or protective films. Comparative Example 3b resulted in low impact resistance due to low [η] of $D_{sol}$, and the film is not suitable as retort films. These results show that the propylene resin compositions according to the present invention are suitable for use as transparent retort films or protective films.
[Table 6]

| | | | Comp. Ex. 1b | Comp. Ex. 2b | Comp. Ex. 3b | Comp. Ex. 4b | Comp. Ex. 5b |
|---|---|---|---|---|---|---|---|
| Propylene block copolymer C2-6b | | | 100 | | | | |
| Propylene block copolymer C2-7b | | | | 100 | | | |
| Propylene block copolymer C2-8b | | | | | 100 | | |
| Propylene polymer I'-1b | | | | | | 80 | |
| Propylene polymer I'-2b | | | | | | | 80 |
| Propylene/ethylene copolymer B-1b | | | | | | | 20 |
| Propylene/ethylene copolymer B-2b | | | | | | 20 | |
| AB agent 1 | | | 0.5 | 0.5 | 0.5 | 0.5 | 0.5 |
| Product (70 µm cast film) | MFR | g/10 min | 1.9 | 2 | 3.1 | 1.6 | 1.6 |
| | Young's modulus | MPa | 740 | 760 | 730 | 790 | 600 |
| | Impact (0°C) | kJ/m | 31 | 39 | 20 | 19 | >40 |
| | Impact (-10°C) | kJ/m | 10 | 37 | 7 | 4 | >40 |
| | Seal strength | N/15 mm | 25 | 18 | 22 | 24 | 18 |
| | HAZE | % | 7 | 34 | 10 | 9 | 5 |
| | Blocking resistance | mN/cm | 2 | 1 | 20 | 20 | 59 |

[Table 7]

| | | | Ex. 2b | Comp. Ex. 1b | Comp. Ex. 2b | Comp. Ex. 3b |
|---|---|---|---|---|---|---|
| Propylene block copolymer | | | C2-2b | C2-6b | C2-7b | C2-8b |
| Homo part | Tm | °C | 145 | 145 | 145 | 145 |
| $D_{sol}$ | Content | wt% | 20 | 20 | 20 | 20 |
| | C2 content | mol% | 30 | 13 | 54 | 30 |
| | [η] | dl/g | 2.1 | 2.1 | 2.0 | 1.4 |
| Product (70 µm cast film) | MFR | g/10 min | 1.6 | 1.9 | 2.0 | 3.1 |
| | Young's modulus | MPa | 740 | 740 | 760 | 730 |
| | Impact (0°C) | kJ/m | 39 | 31 | 39 | 20 |
| | Impact (-10°C) | kJ/m | 34 | 10 | 37 | 7 |
| | Seal strength | N/15 mm | 24 | 25 | 18 | 22 |
| | HAZE | % | 9 | 7 | 34 | 10 |
| | Blocking resistance | mN/cm | 14 | 2 | 1 | 20 |

Table 8 sets forth film properties and elastic modulus at high temperature (135°C). In Comparative Example

5b, the PP part had a low melting point of 138°C and consequently the elastic modulus at around 135°C was so low that the film cannot withstand high retort treatment (at 135°C), whereas Examples 1b, 2b, 6b and 7b achieved two times or more as high as the elastic modulus at 135°C. In particular, Example 1b in which the melting point was 156°C achieved the highest elastic modulus at 135°C. In Examples 6b and 7b, the propylene polymer having a high melting point was added to improve heat resistance of the propylene block copolymer according to the present invention. Examples 6b and 7b achieved approximately 4 times as high as the elastic modulus at 135°C compared to Comparative Example 5b. These results show that the films of the invention possess superior properties enough to withstand high retort treatment.

[Table 8]

| | | | Ex. 1b | Ex. 2b | Ex. 6b | Ex. 7b | Comp. Ex. 5b |
|---|---|---|---|---|---|---|---|
| Propylene (block) copolymer | | | C2-1b | C2-2b | C2-3b | C2-3b | A-3b |
| Homo part | Tm | °C | 156 | 145 | 145 | 145 | 138 |
| $D_{sol}$ | Content | wt% | 20 | 20 | 25 | 25 | <0.5 |
| | C2 content | mol% | 29 | 30 | 29 | 29 | - |
| | [η] | dl/g | 2.0 | 2.1 | 2.1 | 2.1 | - |
| Modifiers | Propylene polymer A-1 (Tm=158°C, M1 catalyzed) | wt% | - | - | 20 | - | - |
| | Propylene polymer A-2 (Tm=160°C, ZN catalyzed) | wt% | - | - | - | 20 | - |
| | Propylene/ethylene copolymer B-1 (M2 catalyzed) | wt% | - | - | - | - | 20 |
| Product (70 µm cast film) | MFR | g/10 min | 1.7 | 1.6 | 1.7 | 1.8 | 1.6 |
| | Young's modulus | MPa | 1000 | 740 | 810 | 800 | 600 |
| | Impact (0°C) | kJ/m | 25 | 39 | 39 | 32 | >40 |
| | Impact (-10°C) | kJ/m | 8 | 34 | 34 | 32 | >40 |
| | Seal strength | N/15 mm | 26 | 24 | 26 | 26 | 18 |
| | HAZE | % | 10 | 9 | 8 | 10 | 5 |
| | Blocking resistance | mN/cm | 10 | 14 | 14 | 14 | 59 |
| Solid visco-elasticity | Storage elastic modulus at 135°C | MPa | 151 | 36 | 60 | 59 | 19 |

Table 9 compares properties of films produced by different methods. The propylene block copolymer (C2-1b) used in Example 1b was produced by two-stage polymerization in the presence of a metallocene catalyst (M1). In Example 10b, the propylene polymer (A-1b) produced with a metallocene catalyst (M1) and the propylene/ethylene copolymer (B-1b) produced with a metallocene catalyst (M2) were melt kneaded to give a composition similar to the propylene block copolymer (C2-1b). The films from these examples were similar in properties such as rigidity, impact resistance and haze. This result shows that the propylene resin compositions are suitably used in packaging materials such as transparent retort films and protective films irrespective of whether the composition is produced by two-stage polymerization or melt kneading, as long as the composition requirements of the invention are satisfied.

The propylene resin composition in Comparative Example 4b was produced by melt kneading the ZN-catalyzed propylene polymer and ZN-catalyzed propylene/ethylene copolymer. Comparative Example 4b resulted in lower rigidity and impact resistance than the above examples and the film is not suited for use as retort films.

[Table 9]

| | | | Ex. 1b | Ex. 10b | Comp. Ex. 4b |
|---|---|---|---|---|---|
| Propylene block copolymer C2-1b (M1 catalyzed) | | | 100 | | |
| Propylene polymer A-1b (M1 catalyzed) | | | | 80 | |
| Propylene polymer I'-1b (ZN catalyzed) | | | | | 80 |
| Propylene/ethylene copolymer B-1b (M2 catalyzed) | | | | 20 | |
| Propylene/ethylene copolymer B-2b (ZN catalyzed) | | | | | 20 |
| AB agent 1 | | | 0.5 | 0.5 | 0.5 |
| Product (70 μm cast film) | MFR | g/10 min | 1.7 | 1.8 | 1.6 |
| | Young's modulus | MPa | 1000 | 1010 | 790 |
| | Impact (0°C) | kJ/m | 25 | 23 | 19 |
| | Impact (-10°C) | kJ/m | 8 | 8 | 4 |
| | Seal strength | N/15 mm | 26 | 25 | 24 |
| | HAZE | % | 10 | 10 | 9 |
| | Blocking resistance | mN/cm | 10 | 10 | 20 |

Table 10 considers the addition of the anti-blocking agent to the propylene resin composition of the invention. In Examples 2b and 3b, the anti-blocking agent AB-1 (particle diameter: 3.9 μm) was used in an amount of 0.5 PHR

and 0.3 PHR, respectively. The anti-blocking agent AB-2 (particle diameter: 6. 2 μm) was used in an amount of 0. 3 PHR in Example 4b. In Example 5b, no anti-blocking agents were added.

[Table 10]

| | | | Ex. 2b | Ex. 3b | Ex. 4b | Ex. 5b |
|---|---|---|---|---|---|---|
| Propylene block copolymer C2-2b | | | 100 | 100 | 100 | 100 |
| Propylene block copolymer C2-3b | | | | | | |
| Propylene block copolymer C2-4b | | | | | | |
| Propylene block copolymer C2-2b | | | 100 | 100 | 100 | 100 |
| AB agent 1 | | | 0.5 | 0.3 | | |
| AB agent 2 | | | | | 0.3 | |
| Product (70 μm cast film) | MFR | g/10 min | 1.6 | 1.6 | 1.6 | 1.6 |
| | Young's modulus | MPa | 740 | 730 | 730 | 720 |
| | Impact (0°C) | kJ/m | 39 | 39 | 38 | 39 |
| | Impact (-10°C) | kJ/m | 34 | 33 | 34 | 34 |
| | Seal strength | N/15 mm | 24 | 25 | 25 | 24 |
| | HAZE | % | 9 | 7 | 7 | 3 |
| | Blocking resistance | mN/cm | 14 | 28 | 14 | 300 |

The results of Examples 2b, 3b and 5b indicate that increasing the amount of the anti-blocking agent provides higher blocking resistance. The comparison between Example 3b and Example 4b shows that anti-blocking agents having larger particle diameters provide higher improvement in blocking resistance while ensuring high transparency. Example 5b in which no anti-blocking agents were added resulted in bad blocking resistance and the film is not suited for high retort application. However, the film of Example 5b showed high stickiness and can be used for pressure-sensitive

adhesive protective films.

[Production Example 14b]

Production of propylene block copolymer (C2-9b)

A propylene block copolymer (C2-9b) was synthesized in the same manner as in Production Example 1b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (2) at 2.3 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.17 mol% in the gas phase. The polymerization temperature and pressure were 70°C and 3.0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.26 (molar ratio) and hydrogen/ethylene ≈ 0 (molar ratio). The polymerization temperature and pressure were 70°C and 0.9 MPa/G.

The propylene block copolymer (C2-9b) obtained was vacuum dried at 80°C.

[Production Example 15b]

Production of propylene block copolymer (C2-10b)

A propylene block copolymer (C2-10b) was synthesized in the same manner as in Production Example 1b except that the polymerization was carried out as follows.

(1) Polymerization

To a 58-liter jacketed circulation tubular polymerization reactor, there were continuously supplied propylene at 30 kg/h, hydrogen at 2 NL/h, the catalyst slurry prepared in (2) at 2.3 g solid catalyst component/h, and triethylaluminum at 2.5 ml/h. Polymerization was carried out in the filled reactor without any gas phase. The temperature and pressure in the tubular reactor were 30°C and 3.1 MPa/G.

The slurry obtained was fed to a 100-liter polymerization vessel equipped with a stirrer and polymerization was further conducted by supplying propylene at 15 kg/h and hydrogen to a hydrogen concentration of 0.17 mol% in the gas phase. The polymerization temperature and pressure were 70°C and 3. 0 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.09 (molar ratio) and hydrogen/ethylene ≈ 0 (molar ratio). The polymerization temperature and pressure were 70°C and 1.1 MPa/G.

The propylene block copolymer (C2-10b) obtained was vacuum dried at 80°C.

[Production Example 16b]

Production of propylene block copolymer (C2-11b)

A propylene block copolymer (C2-11b) was synthesized in the same manner as in Production Example 10b except that the polymerization was carried out as follows.

(1) Polymerization

To a 58-liter jacketed circulation tubular polymerization reactor, there were continuously supplied propylene at 30 kg/h, hydrogen at 51 NL/h, the catalyst slurry at 0.27 g solid catalyst component/h, triethylaluminum at 3.1 ml/h, and dicyclopentyldimethoxysilane at 1.0 ml/h. Polymerization was carried out in the filled reactor without any gas phase. The temperature and pressure in the tubular reactor were 70°C and 3.2 MPa/G.

The slurry obtained was fed to a 100-liter polymerization vessel equipped with a stirrer and polymerization was further conducted by supplying propylene at 15 kg/h and hydrogen to a hydrogen concentration of 3.1 mol% in the gas phase. The polymerization temperature and pressure were 70°C and 3.1 MPa/G.

The slurry obtained was transferred to a 2.4-liter liquid-transfer tube and was gasified for gas-solid separation. The powder of the polypropylene homopolymer was fed to a 480-liter gas phase polymerization reactor, and block copolymerization of ethylene and propylene was carried out. In detail, propylene, ethylene and hydrogen were continuously supplied so that the gas composition in the gas phase polymerization reactor would be ethylene/(ethylene+propylene) = 0.32 (molar ratio) and hydrogen/ethylene = 0.3 (molar ratio). The polymerization temperature and pressure were 70°C and 0.5 MPa/G.

The propylene block copolymer (C2-11b) obtained was vacuum dried at 80°C.

[Production Example 17b]

Production of propylene polymer (I'-3b)

A propylene polymer (I'-3b) was synthesized in the same manner as in Production Example 10b except that the polymerization was carried out as follows.

(1) Polymerization

To a 58-liter jacketed circulation tubular polymerization reactor, there were continuously supplied propylene at 30 kg/h, hydrogen at 51 NL/h, the catalyst slurry at 0.27 g solid catalyst component/h, triethylaluminum at 3.1 ml/h, and dicyclopentyldimethoxysilane at 1.0 ml/h. Polymerization was carried out in the filled reactor without any gas phase. The temperature and pressure in the tubular reactor were 70°C and 3.2 MPa/G.

The slurry obtained was fed to a 100-liter polymerization vessel equipped with a stirrer and polymerization was further conducted by supplying propylene at 15 kg/h and hydrogen to a hydrogen concentration of 3.1 mol% in the gas phase. The polymerization temperature and pressure were 70°C and 3.1 MPa/G.

The slurry obtained was gasified for gas-solid separation, and a propylene polymer was obtained. The propylene polymer (I'-3b) obtained was vacuum dried at 80°C.

The results are set forth in Table 11.

[Table 11]

| | | | Prod. Ex. 14b | Prod. Ex. 15b | Prod. Ex. 16b | Prod. Ex. 17b |
|---|---|---|---|---|---|---|
| Polymer | | | C2-9b | C2-10b | C2-11b | I'-3b |
| Catalyst system Tm | | | M1 | M1 | ZN | ZN |
| Homo part | Tm | °C | 157 | 157 | 160 | 160 |
| | MFR | g/10 min | 22 | 22 | 23 | 22 |
| | 1,3-insertion + 2,1-insertion | mol% | 0 | 0 | 0 | 0 |
| $D_{insol}$ | Content | wt% | 75 | 75 | 75 | 99.5< |
| | Mw/Mn | | 2.2 | 2.2 | 5.5 | 5.4 |
| $D_{sol}$ | Content | wt% | 25 | 25 | 25 | <0.5 |
| | C2 content | mol% | 35 | 13 | 40 | - |
| | [η] | dl/g | 2.1 | 2.1 | 2.2 | - |
| | Mw/Mn | | 2.2 | 2.2 | 5.7 | - |

(continued)

| | | | Prod. Ex. 14b | Prod. Ex. 15b | Prod. Ex. 16b | Prod. Ex. 17b |
|---|---|---|---|---|---|---|
| Product | MFR | g/10 min | 13 | 11 | 12 | 22 |

[Example 11b]

100 parts by weight of the propylene block copolymer (C2-9b) from Production Example 14b was mixed in a tumbler with 0. 1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (AB agent 1, particle diameter: 3. 9 μm, manufactured by FUJI SILYSIA CHEMICAL LTD.). The mixture was melt kneaded in a twin-screw extruder and pelletized to give pellets of a polypropylene resin composition. The pellets were extruded with a T-die extruder (GT-25A manufactured by PLABOR Co., Ltd.) into a cast film. Properties of the film are set forth in Table 12.

<Melt kneading conditions>

Parallel twin-screw kneader: NR2-36 manufactured by NAKATANI KIKAI K.K.
Kneading temperature: 240°C
Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 7.5 m/min
Film thickness: 30 μm

[Comparative Example 6b]

A cast film was produced in the same manner as in Example 11b, except that 100 parts by weight of the propylene block copolymer (C2-9b) was replaced by 100 parts by weight of the propylene block copolymer (C2-10b) from Production Example 15b. Properties of the film are set forth in Table 12.

[Comparative Example 7b]

A cast film was produced in the same manner as in Example 11b, except that 100 parts by weight of the propylene block copolymer (C2-9b) was replaced by 100 parts by weight of the propylene block copolymer (C2-11b) from Production Example 16b. Properties of the film are set forth in Table 12.

[Comparative Example 8b]

100 parts by weight consisting of 75 parts by weight of the propylene polymer (I'-3b) from Production Example 11b and 25 parts by weight of an ethylene/octene copolymer (D-2b) (ENGAGE® 8842 manufactured by DuPont Dow Elastomers, density = 0.858 (g/cm$^3$)) were mixed in a tumbler with 0.1 part by weight of heat stabilizer IRGANOX 1010 (manufactured by Ciba Specialty Chemicals Inc.), 0.1 part by weight of heat stabilizer IRGAFOS 168 (manufactured by Ciba Specialty Chemicals Inc.), 0.1 part by weight of calcium stearate and 0.5 part by weight of anti-blocking agent Sylophobic 505 (manufactured by FUJI SILYSIA CHEMICAL LTD.). The mixture was melt kneaded in a twin-screw extruder and pelletized to give pellets of a polypropylene resin composition. The pellets were extruded with a T-die extruder (GT-25A manufactured by PLABOR Co., Ltd.) into a cast film. Properties of the film are set forth in Table 12.

<Melt kneading conditions>

Parallel twin-screw kneader: NR2-36 manufactured by NAKATANI KIKAI K.K.
Kneading temperature: 240°C

Screw rotation: 200 rpm
Feeder rotation: 400 rpm

<Film production>

25 mm diameter T-die extruder: GT-25A manufactured by PLABOR Co., Ltd.
Extrusion temperature: 230°C
Chill roll temperature: 30°C
Take-up speed: about 7.5 m/min
Film thickness: 30 μm
[Table 12]

| | | | Ex. 11b | Comp. Ex. 6b | Comp. Ex. 7b | Comp. Ex. 8b |
|---|---|---|---|---|---|---|
| Propylene (block) copolymer | | | C2-9b | C2-10b | C2-11b | I'-3b |
| Catalyst system | | | M1 | M1 | ZN | ZN |
| Homo part | Tm | °C | 157 | 157 | 160 | 160 |
| $D_{sol}$ | Content | wt% | 25 | 25 | 25 | <0.5 |
| | C2 content | mol% | 35 | 13 | 40 | - |
| | [η] | dl/g | 2.1 | 2.1 | 2.2 | - |
| Modifier | Ethylene/α-olefin copolymer D-2 | wt% | - | - | - | 20 |
| Product (30 μm cast film) | MFR | g/10 min | 13 | 11 | 12 | 13 |
| | Young's modulus | MPa | 820 | 790 | 740 | 840 |
| | Impact (0°C) | kJ/m | 23 | 20 | 24 | 23 |
| | Oxygen permeability coefficient | $cm^3/m^2 \cdot 24$ h· atm | 4300 | 3500 | 4400 | 4200 |
| | Carbon dioxide permeability coefficient | $cm^3/m^2 \cdot 24$ h· atm | 13800 | 12600 | 13700 | 13800 |

Table 12 sets forth gas permeability and mechanical properties. The film from Example 11b showed high gas permeability and rigidity and proved to be suited as freshness-keeping films. Comparative Example 6b in which the ethylene content in $D_{sol}$ was below the range defined in the present invention resulted in low gas permeability. The film of Comparative Example 7b that was composed of the ZN-catalyzed block copolymer showed lower rigidity than the

film of Example 11b. Comparative Example 8b achieved gas permeability and rigidity comparable to those in Example 11b, but this comparative example involved the melt kneading of the propylene polymer and the ethylene/octene copolymer, thus increasing the production costs or energy consumption.

INDUSTRIAL APPLICABILITY

The propylene resin compositions or propylene copolymers satisfying the specific properties in the invention can give films or sheets that are excellent in transparency, rigidity, low-temperature impact resistance, blocking resistance and controlled stickiness, and the films or sheets may be suitably used as retort films, protective films, medical containers and freshness-keeping films and sheets for similar purposes.

## Claims

**1.** A packaging propylene resin composition comprising 60 to 90 wt% of a propylene polymer (A) satisfying the requirements (a1) and (a2) and 40 to 10 wt% of a propylene/ethylene copolymer (B) satisfying the requirements (b1) to (b4) ((A) + (B) = 100 wt%) :

Propylene polymer (A):

(a1) the melt flow rate (MFR: ASTM D 1238, 230°C, 2.16 kg load) is 0.1 to 40 (g/10 min); and
(a2) the melting point (Tm) measured with a differential scanning calorimeter (DSC) is 145 to 170°C;

Propylene/ethylene copolymer (B):

(b1) the content of ethylene-derived structural units is 15 to less than 45 mol%;
(b2) the intrinsic viscosity [η] determined in decalin at 135°C is 1.8 to 3.5 dl/g;
(b3) the molecular weight distribution (Mw/Mn) is not more than 3.5; and
(b4) the content of a 23°C n-decane soluble part is not less than 95 wt%.

**2.** The packaging propylene resin composition according to claim 1, wherein the propylene polymer (A) has a molecular weight distribution (Mw/Mn) of not more than 3.5.

**3.** The packaging propylene resin composition according to claim 1 or 2, wherein the propylene/ethylene copolymer (B) is produced by polymerization in the presence of a metallocene catalyst.

**4.** The packaging propylene resin composition according to any one of claims 1 to 3, wherein the melt flow rate (a1) of the propylene polymer (A) is 0.1 to 10 g/10 min and the content of ethylene-derived structural units (b1) in the propylene/ethylene copolymer (B) is 15 to 25 mol%.

**5.** The packaging propylene resin composition according to any one of claims 1 to 3, wherein the content of ethylene-derived structural units (b1) in the propylene/ethylene copolymer (B) is more than 25 to less than 45 mol%.

**6.** A packaging propylene resin composition which comprises 60 to 90 wt% of a 23°C n-decane insoluble part ($D_{insol}$) satisfying the requirements (a1') and (a2') and 40 to 10 wt% of a 23°C n-decane soluble part ($D_{sol}$) satisfying the requirements (b1') to (b3'), and which has a melt flow rate (MFR: ASTM D 1238, 230°C, 2.16 kg load) of 0.1 to 20 g/10 min:

N-decane insoluble part ($D_{insol}$) :

(a1') the content of ethylene-derived structural units is not more than 2 wt%; and
(a2') the melting point (Tm) measured with a differential scanning calorimeter (DSC) is 145 to 170°C;

N-decane soluble part ($D_{sol}$) :

(b1') the content of ethylene-derived structural units is 15 to less than 45 mol%;
(b2') the intrinsic viscosity [η] determined in decalin at 135°C is 1.8 to 3.5 dl/g; and
(b3') the molecular weight distribution (Mw/Mn) is not more than 3.5.

7. The packaging propylene resin composition according to claim 6, wherein the propylene resin composition is a propylene block copolymer that is produced by continuously carrying out [Step 1] and [Step 2] in the presence of a metallocene catalyst:

[Step 1] propylene is homopolymerized or copolymerized with ethylene to give a polymer that contains a 23°C n-decane soluble part ($D_{sol}$) at not more than 0.5 wt%;
[Step 2] propylene and ethylene are copolymerized to give a copolymer that contains a 23°C n-decane insoluble part ($D_{insol}$) at not more than 5.0 wt%.

8. The packaging propylene resin composition according to claim 6 or 7, wherein the content of ethylene-derived structural units (b1') in the n-decane soluble part ($D_{sol}$) is 15 to 25 mol%.

9. The packaging propylene resin composition according to claim 8, further comprising an ethylene/propylene copolymer (B') in which the content of ethylene-derived structural units is 25 to 85 mol%.

10. The packaging propylene resin composition according to claim 6 or 7, wherein the content of ethylene-derived structural units (b1') in the n-decane soluble part ($D_{sol}$) is more than 25 to less than 45 mol%.

11. The packaging propylene resin composition according to any one of claims 1 to 10, further comprising an ethylene/$\alpha$-olefin copolymer (D) having a density of 0.850 to 0.920 g/cm$^3$.

12. A retort film or sheet obtained by shaping the packaging propylene resin composition of any one of claims 1 to 11.

13. A protective film or sheet obtained by shaping the packaging propylene resin composition of any one of claims 1 to 11.

14. A medical container packaging film or sheet obtained by shaping the packaging propylene resin composition of any one of claims 1 to 11.

15. A freshness-keeping packaging film or sheet obtained by shaping the packaging propylene resin composition of any one of claims 1 to 11.

## INTERNATIONAL SEARCH REPORT

International application No.
PCT/JP2007/065362

A. CLASSIFICATION OF SUBJECT MATTER
*C08L23/10*(2006.01)i, *C08F297/08*(2006.01)i, *C08J5/18*(2006.01)i, *C08L23/08*(2006.01)i, *C08L53/00*(2006.01)i

According to International Patent Classification (IPC) or to both national classification and IPC

B. FIELDS SEARCHED

Minimum documentation searched (classification system followed by classification symbols)
C08L23/10, C08F297/08, C08J5/18, C08L23/08, C08L53/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-107490 A (Mitsui Chemicals, Inc.), 08 April, 2004 (08.04.04), Claims; Par. Nos. [0019] to [0099] (Family: none) | 1-15<br>11 |
| X<br>Y | JP 2004-051801 A (Mitsui Chemicals, Inc.), 19 February, 2004 (19.02.04), Claims; Par. Nos. [0010] to [0091] (Family: none) | 1-10,12-15<br>11 |
| A | WO 2006/057361 A1 (Mitsui Chemicals, Inc.), 01 June, 2006 (01.06.06), Claims; Par. Nos. [0105] to [0189] (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 October, 2007 (30.10.07) | 13 November, 2007 (13.11.07) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2007/065362

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-176600 A (Mitsui Chemicals, Inc.), 06 July, 2006 (06.07.06), Claims; Par. Nos. [0014] to [0086] | 1-15 |
| A | WO 2002/074855 A1 (Mitsui Chemicals, Inc.), 26 September, 2002 (26.09.02), Claims & EP 1302508 A1 & US 2003/187121 A1 | 1-15 |
| A | JP 2003-049031 A (Mitsui Chemicals, Inc.), 21 February, 2003 (21.02.03), Claims (Family: none) | 1-15 |
| A | JP 2001-081255 A (Idemitsu Kosan Co., Ltd.), 27 March, 2001 (27.03.01), Claims (Family: none) | 1-15 |

Form PCT/ISA/210 (continuation of second sheet) (April 2007)

**INTERNATIONAL SEARCH REPORT**

International application No.
PCT/JP2007/065362

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

Claims 1-5 relate to a resin composition which contains specific additive ingredients, while claims 6-10 relate to a resin composition which itself has specific properties, etc. Namely, the subject matter of claims 6-10 is not specified with respect to the kind of any additive ingredient. Because of this, claims 6-10 are not considered to have the technical feature of claims 1-5. The resin compositions defined respectively in the two groups of claims are different and are not a group of inventions which form a general inventive concept.

On the other hand, claims 11-15, in which claims 1-10 are cited, have both (continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

**INTERNATIONAL SEARCH REPORT**

International application No.
PCT/JP2007/065362

Continuation of Box No.III of continuation of first sheet(2)

of the technical feature of claims 1-5 and the technical feature of claims 6-10. Consequently, claims 11-15 are considered to have two inventions in each claims.

Therefore, it is obvious that claims 1-15 do not comply with the requirement of unity of invention as provided for in Rule 13.1 of the Regulations under the PCT.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000255012 A
- JP 2006152068 A
- JP 2001172402 A
- JP 20043597711 A
- JP 2000168006 A
- JP 2001106802 A
- JP 2006299229 A
- WO 0127124 A
- JP H11315109 A

### Non-patent literature cited in the description

- *J. Polym. Sci.,* 1970, vol. 8, 1803
- *Makromol. Chem.,* 1976, vol. 177, 213
- *Rubber Chem. Technol.,* 1971, vol. 44, 781